(19)

**Europäisches Patentamt**

**European Patent Office**

**Office européen des brevets**

(11) **EP 4 393 982 A1**

(12) **EUROPEAN PATENT APPLICATION**

(43) Date of publication:
**03.07.2024 Bulletin 2024/27**

(21) Application number: **22307077.2**

(22) Date of filing: **31.12.2022**

(51) International Patent Classification (IPC):
**C08J 3/12** *(2006.01)*     **C08J 3/22** *(2006.01)*
**C08J 3/24** *(2006.01)*     **C08L 33/12** *(2006.01)*

(52) Cooperative Patent Classification (CPC):
**C08J 3/22; C08L 33/12;** C08J 2333/06;
C08J 2333/12; C08J 2433/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ARKEMA FRANCE**
**92700 Colombes (FR)**

(72) Inventors:
• **MACNEILL, M. Christopher Michael**
**EXTON, 19341 (US)**

• **HE, Yuhong**
**EXTON, 19341 (US)**
• **LI, Ling**
**EXTON, 19341 (US)**
• **BIRIA, Saeid**
**EXTON, 19341 (US)**

(74) Representative: **Arkema Patent**
**Arkema France**
**DRD-DPI**
**420, rue d'Estienne d'Orves**
**92705 Colombes Cedex (FR)**

(54) **MULTISTAGE POLYMER COMPOSITIONS AND COATINGS COMPRISING CURED MULTISTAGE POLYMER COMPOSITIONS**

(57) The invention is directed to methods for preparing a multistage polymer particle masterbatch composition, to multistage polymer particle masterbatch compositions prepared therefrom, to curable compositions prepared from the multistage polymer particle masterbatch compositions, and to coated substrates coated with a cured product obtained by curing the multistage polymer particle masterbatch composition or the curable composition.

**EP 4 393 982 A1**

**Description**

**TECHNICAL FIELD**

The invention is directed to methods for preparing a multistage polymer particle masterbatch composition, to multistage polymer particle masterbatch compositions prepared therefrom, to curable compositions prepared from the multistage polymer particle masterbatch compositions, and to coated substrates coated with a cured product obtained by curing the multistage polymer particle masterbatch composition or the curable composition.

**BACKGROUND**

Core-shell rubber tougheners are utilized in many thermoset applications. Typically, core shell rubber tougheners are provided as a spray-dried powder that is dispersed in a (meth)acrylate monomer resin with specialized equipment. In addition, numerous core-sell tougheners cannot disperse in certain acrylic monomers.

Formulators of photocurable and thermally curable acrylic thermoset materials having high glass transition temperature (Tg) are faced with numerous challenges including brittleness, low strain at break, limited flexibility and poor toughness of their resultant formulated products. A high-$T_g$ acrylic thermoset material can experience stress from external sources such as bending, twisting, compression, or stretching. The stress can come also from internal forces, such as shrinkage stress during polymerization or from a mismatch in thermal expansion coefficients of blended materials. Toughening agents containing a rubbery component or a core-shell particle can address some of the challenges, whereby toughening can occur via one or more mechanisms, such as energy absorption by the rubber, debonding at the particle-matrix interface, matrix crazing, and shear yielding.

Core-shell toughening agents have limited use in some applications, owing to their inability to disperse in certain acrylic monomers, particularly in hydrophobic acrylic monomers. Certain hydrophobic monomers can cause particles to either swell or agglomerate. Agglomerations of particles act as stress concentrators, owing due to their larger size. Agglomerations can have a detrimental effect on performance. Toughening of an acrylic material with core-shell particles requires that the particles be fully dispersed in the acrylic resin continuous phase. Naturally, this morphology requires a successful dispersion of core-shell particles in the acrylic resin composition prior to polymerization. A key aspect of using core-shell particles in light and peroxide curable thermoset compositions is ensuring that the formulation has high dispersion quality.

Achieving a high quality of dispersion usually requires aggressive mixing or milling of the powder into the resin. Examples of suitable equipment include a double planetary mixer, rotor stator, high-speed dispersion bade, or a three-roll mill. The mixing energy needed is high and varies with the compatibility between the particles and the liquid resin. Ultimately, manufacturing operations that have the equipment and the safety precautions in place are satisfied with using powder additives. For others, utilizing core-shell particles in their thermoset formulations is not an option. Accordingly, ongoing needs exist for toughening agents that are readily dispersible in acrylic monomers.

**SUMMARY**

The invention is directed to methods for preparing a multistage polymer particle masterbatch composition, to multistage polymer particle masterbatch compositions prepared therefrom, to curable compositions prepared from the multistage polymer particle masterbatch compositions, and to coated substrates coated with a cured product obtained by curing the multistage polymer particle masterbatch composition or the curable composition.

A first object of the invention is a method for preparing a multistage polymer particle masterbatch composition. The method comprises a step (a) of adding an organic solvent to an aqueous dispersion containing multistage polymer particles and water. The organic solvent is at least partially miscible in the water. The method further comprises a step (b) of increasing a ratio of the organic solvent to the water in the aqueous dispersion by removing liquids from the aqueous dispersion and subsequently replacing the liquids with additional portions of the organic solvent to obtain an organic-solvent based dispersion. The organic-solvent based dispersion includes the multistage polymer particles, the organic solvent, and residual water. The method further comprises a step (c) of adding at least one (meth)acrylate monomer to the organic-solvent based dispersion. The method further comprises a step (d) of removing the organic solvent and residual water from the organic-solvent based dispersion to obtain the multistage polymer particle masterbatch composition. The multistage polymer particles include a core polymer, an inner shell polymer surrounding the core polymer, and an outer shell polymer surrounding the inner shell polymer. The core polymer has a glass transition temperature of less than 10 °C. The inner shell polymer has a glass transition temperature of at least 60 °C. The outer shell polymer has a glass transition temperature of at least 30 °C.

Another object of the invention is a multistage polymer particle masterbatch composition prepared according to the method disclosed herein.

Another object of the invention is a curable composition comprising a multistage polymer particle masterbatch composition according to invention, in combination with at least one initiator.

Another object of the invention is a coated substrate comprising a substrate and a coating prepared by applying a layer of a multistage polymer particle masterbatch composition according to the invention or a curable composition according to the invention on at least a portion of a surface of the substrate and curing the layer.

These and other features, aspects, and advantages will become better understood with reference to the following description and the appended claims.

Additional features and advantages of the embodiments described herein will be set forth in the detailed description that follows, and in part will be readily apparent to those skilled in the art from that description or recognized by practicing the embodiments described herein, including the detailed description and claims that follow.

It is to be understood that both the foregoing general description and the following detailed description describe various embodiments and are intended to provide an overview or framework for understanding the nature and character of the claimed subject matter.

## DETAILED DESCRIPTION

### Definitions

As used herein, the term "comprises a" can mean "comprises one or more".

The term "substitution" herein means that at least one hydrogen atom (-H) bonded to a carbon atom or heteroatom of a corresponding unsubstituted compound or functional group is replaced by a substituent (e.g. $R^S$). Unless otherwise defined or limited in a specific context, a substituent group generally, or a substituent group referred to as $R^S$, may be any chemical moiety, typically, but not necessarily limited to, a chemical moiety having from 1 to 50, or from 1 to 40, or from 1 to 30, or from 1 to 20, or from 1 to 10 total atoms. Examples of substituent groups $R^S$ include, but are not limited to, a hydrocarbyl, a heterohydrocarbyl, an aryl, a heteroaryl, an alkyl, a cycloalkyl, a heteroatom, a carbonyl, a hydroxy, an ester, an ether, an amine, an amide, or a halide according to their respective definitions herein or their commonly understood meaning, any of which substituents themselves may be substituted or unsubstituted.

The term "hydrocarbyl" means a monovalent hydrocarbon, in which each hydrocarbon is aromatic or non-aromatic, saturated or unsaturated, straight chain or branched chain, cyclic (having three carbons or more, and including mono- and poly-cyclic, fused and non-fused polycyclic, and bicyclic) or acyclic, and substituted by one or more $R^S$, or unsubstituted. In this disclosure, hydrocarbyl may be an unsubstituted or substituted alkyl, an unsubstituted or substituted cycloalkyl, or an unsubstituted or substituted aryl.

The term "aryl" means an optionally substituted polyunsaturated aromatic group. The aryl may contain a single ring (i.e. phenyl) or more than one ring wherein at least one ring is aromatic. When the aryl comprises more than one more ring, the rings may be fused, linked via a covalent bond (for example biphenyl). The aromatic ring may optionally comprise one to two additional fused rings (i.e. cycloalkyl, heterocycloalkyl or heteroaryl). Examples include phenyl, naphthyl, biphenyl, phenanthrenyl and naphthacenyl.

The term "alkyl" means a monovalent saturated acyclic hydrocarbon group of formula $-C_nH_{2n+1}$ wherein n is 1 to 20. An alkyl may be linear or branched. Examples of alkyl groups include methyl, ethyl, propyl, isopropyl, butyl, isobutyl, tert-butyl, pentyl, hexyl, 2-methylbutyl, 2,2-dimethylpropyl, n-hexyl, 2-methylpentyl, 2,2-dimethylbutyl, n-heptyl, 2-ethylhexyl, and the like.

The term "cycloalkyl" means a monovalent saturated alicyclic hydrocarbon group comprising a cycle. Examples of cycloalkyl groups include cyclopentyl, cyclohexyl, and isobornyl, any of which may be substituted or unsubstituted.

The term "acrylate" refers to an acryloyloxy group having the general structure ($-O-C(=O)-CR=CH_2$), where R may be hydrocarbyl, such as methyl, or hydrogen.

The term "methacrylate" means a methacryloyloxy group with formula ($-O-C(=O)-C(CH_3)=CH_2$).

The term "(meth)acrylate" simultaneously encompasses both acrylates and methacrylates as two discrete options and, where feasible, as a combination. For example, any mention of "methyl (meth)acrylate" as a single example or embodiment is to be understood as mentioning both methyl acrylate and methyl methacrylate as separate examples or separate embodiments and a combination of methyl acrylate and methyl methacrylate where feasible.

The term "(meth)acrylate monomer or oligomers" refers to monomers or oligomers having at least one (meth)acrylate functional group.

The term "monofunctional" with respect to a monomer or oligomer refers to a monomer or oligomer having exactly one bond susceptible to polymerization.

The term "difunctional" with respect to a monomer or oligomer refers to a monomer or oligomer having exactly two bonds susceptible to polymerization.

The term "monomer" refers to a molecule with one or more polymerizable functional groups. The monomer has a single molecular weight, typically below 1000 g/mol, preferably 100 to 950 g/mol. As is recognized, commercial products of a particular monomer may contain impurities or other chemical species.

The term "oligomers" refers to molecules with a distribution of molecular weights and typically having one or more polymerizable functional groups. An oligomer may be the reaction product of two or more monomers and typically has a number averaged molecular weight greater than or equal to 500 g/mol, preferably 500 g/mol to 30,000 g/mol, more preferably 1,000 g/mol to 8,000 g/mol.

The term "residue" (also referred to herein as a polymerized product) shall mean the product of a reactant, such as the moiety remaining from a monomer after the monomer is polymerized to form a polymer, or from a polymer in a block copolymer when the polymer is one of the blocks of the block copolymer. For example, polystyrene is a polymer composed of styrene residues, where each individual styrene residue in the polystyrene is derived from reacting a vinyl olefin of a molecule of styrene (a styrene monomer) in a polymerization reaction.

The term "photoinitiator" refers to a compound that undergoes a photoreaction on absorption of light, producing reactive species. The reactive species that are generated then initiate curing (polymerization) of the reactive components of the curable composition. Generally, when compounds present in the reactive components contain carbon-carbon double bonds, such polymerization (curing) involves reaction of such carbon-carbon double bonds.

The term "actinically-curable" means that when an actinically-curable composition is exposed to actinic radiation, such as ultraviolet light, the actinically-curable composition may polymerize.

The term "polymer powder" means a polymer in the form of a powder comprising powder grains in the range of at least 1 $\mu$m, obtained by agglomeration of primary polymer particles in the nanometer-size range and comprising polymer or polymers.

The term "primary particle" means a spherical polymer particles in the nanometer size range, typically from 20 nm to 800 nm.

The term "particle size" means the volume average diameter of a particle considered as spherical.

The "thermoplastic polymer" means a polymer that turns to a liquid or becomes more liquid or less viscous when heated and that can take on new shapes by the application of heat and pressure.

The term "thermosetting polymer" means a prepolymer in a soft, solid or viscous state that changes irreversibly into an infusible, insoluble polymer network by curing.

The term "copolymer" refers to a polymer that includes at least two different monomer residues.

The term "multistage polymer" means a polymer formed in sequential fashion by a multi-stage polymerization process. Preferred is a multi-stage emulsion polymerization process in which the first polymer is a first-stage polymer and the second polymer is a second-stage polymer, i.e., the second polymer is formed by emulsion polymerization in the presence of the first emulsion polymer, with at least two stages that are different in composition. Core-shell polymers are examples of multistage polymers.

The term "dry" means that the ratio of residual water is less than 1.5% by weight and preferably less than 1.2% by weight.

Ranges from x to y in the present disclosure include the upper and lower limits of the ranges, equivalent to "at least x and up to y."

The term "easily dispersed in liquid" with respect to a resin means a homogenous dispersion of an additive and the resin is obtained by customary mechanical means. The distribution of a polymeric composition is not homogenous if separation takes place after initial homogenization.

The terms "low polar" and "hydrophobic" herein are referred to with respect to a Hansen solubility parameter polarity component ($\delta_p$). Hansen solubility parameters reflect the physicochemical dissolution properties, also called capacities for solvation, of organic substances. Hansen solubility parameters can be calculated according to the approach proposed by Charles Hansen in the work with the title "Hansen Solubility Parameters: A user's handbook," Second Edition (2007) Boca Raton, Fla.: CRC Press. ISBN 978-0-8493-7248-3. According to this approach, three parameters, called "Hansen parameters": $\delta_d$, $\delta_p$, and $\delta_h$ are sufficient for predicting the behavior of a solvent with respect to a given molecule. The parameter $\delta_d$ in MPa$^{1/2}$, quantifies the energy of the forces of dispersion between the molecules, i.e., the van der Waals forces. The parameter $\delta_p$ in MPa$^{1/2}$, represents the energy of the intermolecular dipolar interactions. Finally, the parameter $\delta_h$ in MPa$^{1/2}$, quantifies the energy derived from the intermolecular hydrogen bonds, i.e., the capacity to interact via a hydrogen bond. The sum of the squares of the three parameters corresponds to the square of the Hildebrand solubility parameter ($\delta_{tot}$).

The term "glass transition temperature" or "$T_g$" refers to the temperature at which a material changes from a glassy state to a rubbery state. In this context, the term "glassy" means that the material is hard and brittle while the term "rubbery" means that the material is elastic and flexible. For polymeric materials, the $T_g$ is the critical temperature that separates their glassy and rubbery behaviors. If a polymeric material is at a temperature below its $T_g$, large-scale molecular motion is severely restricted because the material is essentially frozen. On the other hand, if the polymeric material is at a temperature above its $T_g$, molecular motion on the scale of its repeat unit takes place, allowing it to be soft or rubbery.

The glass transitions ($T_g$) of the polymers are measured by thermomechanical analysis. A RDAII "RHEOMETRICS DYNAMIC ANALYSER" proposed by the Rheometrics Company may be used. The thermomechanical analysis measures precisely the visco-elastics changes of a sample in function of the temperature, the strain or the deformation applied. The apparatus records continuously, the sample deformation, keeping the strain fixed (for example at 1 Hz), during a controlled program of temperature variation (for example using a temperature increase from -50°C to 300°C with a temperature gradient of 3°C per minute). The results are obtained by drawing, as a function of the temperature, the elastic modulus (G'), the loss modulus and the tan delta. The $T_g$ is highest temperature value read in the tan delta curve, when the derivative of tan delta is equal to zero.

Unless specified otherwise, molecular weights of polymers or oligomers herein refer to mass average molecular weight (Mw). The mass average molecular weight (Mw) of the polymers is measured with by size exclusion chromatography (SEC). Polystyrene standards are used for calibration. The polymer is dissolved in THF at a concentration of 1g/L. The chromatography column uses modified silica. The flow is 1 mL/minute, and a detector for refractive index is used.

The terms "mass fraction" and "weight fraction" are used herein interchangeably and are to be regarded as equivalent to each other with respect to embodiments or examples herein.

The term "wt.%" means weight percentage, which is equivalent to parts per hundred weight (pphw). Unless otherwise specified, weight percentages of a component of a compound or composition are expressed relative to the total weight of the compound or composition.

## Embodiments

The ability of a core-shell polymeric particle to disperse in an acrylic monomer depends on the solubility parameter as well as the overall hydrophilicity/hydrophobicity of the acrylic monomer. Embodiments herein may be directed to masterbatches containing multistage polymer particles in (meth)acrylate monomers, including hydrophobic (meth)acrylate monomers, which masterbatches are prepared via a solvent exchange process. The solvent exchange process utilizes a latex dispersion of core shell polymer particle dispersed in water where the core-shell polymeric particle is solvent transferred in to a (meth)acrylate monomer via a standard exchange process. The process acts as a way to wash the particles of residual surfactants and other by-products inherent to the latex emulsion, while keeping the core shell particles from re-agglomerating. These resulting liquid toughener dispersions are stable, and their utility is demonstrated in light curable thermoset formulations. The masterbatches in hydrophobic monomer are particularly useful as ingredients in acrylic structural adhesives, electronics, industrial coatings, and other thermoset applications for which greater hydrophobicity is desirable. For demonstration, the ease-of-use of the solvent exchange multistage polymer particle masterbatch dispersion in hydrophobic monomer will be compared experimentally to the addition of core-shell polymer powder.

## Multistage Polymer Particle Masterbatch Compositions

The method for preparing multistage polymer particle masterbatches of the invention involves forming uniform or substantially homogeneous dispersions of multistage polymer particles in at least one (meth)acrylate monomer. Masterbatches prepared by the methods disclosed herein may be included as components of curable compositions, such as thermally curable compositions or photocurable compositions, by addition of an initiator to the masterbatches that enables polymerization or curing of the monomer contained in the masterbatch. The curable compositions may include additional monomers, oligomers and/or additives that are added to the masterbatch, along with the initiator.

## (Meth)acrvlate Monomer

The (meth)acrylate monomer may have 1 to 6 (meth)acrylate groups, in particular 1 to 3 (meth)acrylate groups. The (meth)acrylate monomer may comprise a mixture of (meth)acrylate monomers having different functionalities. For example, the (meth)acrylate monomer may comprise a mixture of a (meth)acrylate monomer containing a single acrylate or methacrylate group per molecule (referred to herein as "mono(meth)acrylate-functionalized monomer") and a (meth)acrylate monomer containing 2 or more, preferably 2 to 4, acrylate and/or methacrylate groups per molecule (referred to herein as "poly(meth)acrylate-functionalized monomer").

The (meth)acrylate monomer may comprise a mono(meth)acrylate-functionalized monomer. Non-limiting examples of suitable mono(meth)acrylate-functionalized monomers are mono(meth)acrylate esters of aliphatic monoalcohols (wherein the aliphatic monoalcohol may be straight chain, branched or alicyclic); mono-(meth)acrylate esters of aromatic alcohols (such as phenols, including alkyl phenols); mono-(meth)acrylate esters of alkylaryl alcohols (such as benzyl alcohol); mono(meth)acrylate esters of monoalkyl ethers of glycols and oligoglycols; mono-(meth)acrylate esters of alkoxylated (e.g., ethoxylated and/or propoxylated) aliphatic monoalcohols (wherein the aliphatic monoalcohol may be straight chain, branched or alicyclic); mono-(meth)acrylate esters of alkoxylated (e.g., ethoxylated and/or propoxylated) aromatic alcohols (such as alkoxylated phenols); and the like.

The following compounds are specific examples of mono(meth)acrylate-functionalized monomers suitable for use in the multistage polymer particle masterbatch composition: (meth)acrylic acid, methyl (meth)acrylate; ethyl (meth)acrylate; n-propyl (meth)acrylate; isopropyl (meth)acrylate; n-butyl (meth)acrylate; isobutyl (meth)acrylate; sec-butyl (meth)acrylate, tert-butyl (meth)acrylate; n-pentyl (meth)acrylate; 2-methylbutyl (meth)acrylate, neopentyl (meth)acrylate, n-hexyl (meth)acrylate; 2-ethylhexyl (meth)acrylate; n-octyl (meth)acrylate; isooctyl (meth)acrylate; n-nonyl (meth)acrylate; n-decyl (meth)acrylate; isodecyl (meth)acrylate; lauryl (meth)acrylate; tridecyl (meth)acrylate; tetradecyl (meth)acrylate; hexadecyl (meth)acrylate; octadecyl (meth)acrylate, behenyl (meth)acrylate, 2,2,3,3-tetrafluoropropyl (meth)acrylate, 2,2,2-trifluoroethyl (meth)acrylate, methyl cyanoacrylate, ethyl cyanoacrylate, butyl cyanoacrylate, 2-cyanoethyl (meth)acrylate, 2-cyanobutyl (meth)acrylate, 1-(dimethylamino)ethyl (meth)acrylate, 1-(diethylamino)ethyl (meth)acrylate; 2-carboxyethyl (meth)acrylate; 2-methoxyethyl (meth)acrylate; 2-ethoxyethyl (meth)acrylate; 2- and 3-ethoxypropyl (meth)acrylate; diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; glycidyl (meth)acrylate, tetrahydrofurfuryl (meth)acrylate; cyclohexyl (meth)acrylate; tert-butylcyclohexyl (meth)acrylate; cyclic trimethylolpropane formal (meth)acrylate; isobornyl (meth)acrylate; adamantyl (meth)acrylate ; tricyclodecanemethanol mono(meth)acrylate; 3,3,5-trimethylcyclohexyl (meth)acrylate; (2,2-dimethyl-1,3-dioxolan-4-yl)methyl (meth)acrylate; (2-ethyl-2-methyl-1,3-dioxolan-4-yl)methyl (meth)acrylate; 1,3-dioxan-5-yl (meth)acrylate; (1,3-dioxolan-4-yl)methyl (meth)acrylate; glycerol carbonate (meth)acrylate ; 3-(2-hydroxyalkyl)oxazolidinone (meth)acrylate, (meth)acryloyl morpholine; 2-phenoxyethyl (meth)acrylate, phenol (meth)acrylate; nonylphenol (meth)acrylate, benzyl (meth)acrylate; as well as the alkoxylated (i.e. ethoxylated and/or propoxylated) derivatives thereof; and combinations thereof.

The (meth)acrylate monomer may comprise a poly(meth)acrylate-functionalized monomer. Non-limiting examples of suitable poly(meth)acrylate-functionalized monomers include acrylate and methacrylate esters of polyols. Such polyols are fully esterified with a (meth)acrylating agent (such as (meth)acrylic acid, (meth)acrylic anhydride, (meth)acryloyl chloride or mixtures thereof) so that the resulting compound contains at least two (meth)acrylate functional groups per molecule and no residual hydroxyl groups. Examples of suitable polyols $P_{OH}$ are ethylene glycol, 1,2- or 1,3-propylene glycol, 1,2-, 1,3- or 1,4-butylene glycol, 1,5-pentanediol, 1,6-hexanediol, 1,7-heptanediol, 1,8-octanediol, 1,9-nonanediol, 1,10-decanediol, 1,12-dodecanediol, 2-methyl-1,3-propanediol, 2,2-diethyl-1,3-propanediol, 3-methyl-1,5-pentanediol, 3,3-dimethyl-1,5-pentanediol, neopentyl glycol, 2,4-diethyl-1,5-pentanediol, 3,3-butylethyl-1,5-pentane diol, cyclohexanediol, cyclohexanedimethanol, norbornene dimethanol, norbornane dimethanol, tricyclodecanediol, tricyclodecanedimethanol, dicyclopentadiene diol, hydroquinone bis(2-hydroxyethyl) ether, pyrocatechol, resorcinol, cardol, phloroglucinol, pyrogallol, tris(hydroxyphenyl)methane, tris(hydroxyphenyl)ethane, bisphenol A, B, F or S, hydrogenated bisphenol A, B, F or S, trimethylolmethane, trimethylolethane, trimethylolpropane, di(trimethylolpropane), triethylolpropane, pentaerythritol, di(pentaerythritol), glycerol, di-, tri- or tetraglycerol, di-, tri- or tetra(ethylene glycol), di-, tri- or tetra(1,2-propylene glycol), di-, tri- or tetra(1,3-propylene glycol), di-, tri- or tetra(1,4-butylene glycol), an alditol (i.e. erythritol, threitol, arabitol, xylitol, ribitol, mannitol, sorbitol, galactitol, fucitol or iditol), a dianhydrohexitol (i.e. isosorbide, isomannide, isoidide), tris(2-hydroxyethyl)isocyanurate, a hydroxylated vegetable oil, a C36 dimer diol, as well as the alkoxylated (e.g., ethoxylated and/or propoxylated) derivatives thereof, the amine-modified and sulfide-modified derivatives thereof, and the derivatives obtained by ring-opening polymerization of ε-caprolactone initiated with one of the aforementioned polyols, and combinations thereof.

The following compounds are specific examples of poly(meth)acrylate-functionalized monomers suitable for use in the multistage polymer particle masterbatch composition: bisphenol A di(meth)acrylate; hydrogenated bisphenol A di(meth)acrylate; ethylene glycol di(meth)acrylate; di-, tri- or tetra-ethylene glycol di(meth)acrylate; 1,2-propylene glycol di(meth)acrylate; di-, tri- or tetra(1,2-propylene glycol) di(meth)acrylate; 1,3-propylene glycol di(meth)acrylate; di-, tri- or tetra(1,3-propylene glycol) di(meth)acrylate, 1,2-butanediol di(meth)acrylate; 2,3-butanediol di(meth)acrylate; 1,3-butanediol di(meth)acrylate; 1,4-butanediol di(meth)acrylate; di-, tri- or tetra(1,4-butanediol) di(meth)acrylate 1,5-pentanediol di(meth)acrylate; 1,6-hexanediol di(meth)acrylate; 1,8-octanediol di(meth)acrylate; 1,9-nonanediol di(meth)acrylate; 1,10-nonanediol di(meth)acrylate; 1,12-dodecanediol di(meth)acrylate; neopentyl glycol di(meth)acrylate; 2-methyl-2,4-pentanediol di(meth)acrylate; cyclohexanedimethanol di(meth)acrylate; tricyclodecanedimethanol di(meth)acrylate; glyceryl tri(meth)acrylate; trimethylolethane tri(meth)acrylate; trimethylolpropane tri(meth)acrylate; pentaerythritol tetra(meth)acrylate, di(trimethylolpropane) tetraacrylate, sorbitol penta(meth)acrylate; di(pentaerythritol) hexa(meth)acrylate; tris (2-hydroxyethyl) isocyanurate tri(meth)acrylate, as well as the alkoxylated (e.g., ethoxylated and/or propoxylated) derivatives thereof, the amine-modified and sulfide-modified derivatives thereof, the derivatives obtained by ring-opening polymerization of ε-caprolactone initiated with one of the aforementioned polyols, and combinations thereof.

In some embodiments, the (meth)acrylate monomer may comprise, consist of or consist essentially of a hydrophobic (meth)acrylate monomer or a mixture of hydrophobic (meth)acrylate monomers. As used herein, the term "hydrophobic (meth)acrylate monomer" refers to a (meth)acrylate monomer having a Hansen solubility parameter polarity component ($\delta_P$) less than 10.5 MPa$^{1/2}$. The hydrophobic (meth)acrylate monomer, therefore, may have a Hansen solubility parameter polarity component ($\delta_P$) less than 10 MPa$^{1/2}$, or less than 9.5 MPa$^{1/2}$, or less than 9 MPa$^{1/2}$, or less than 8.5 MPa$^{1/2}$, for example.

Non-limiting examples of hydrophobic (meth)acrylate monomers include cyclohexane dimethanol diacrylate; cyclohexane dimethanol dimethacrylate; 3,3,5-trimethylcyclohexyl acrylate; 3,3,5-trimethylcyclohexyl methacrylate; tert-butyl cyclohexyl acrylate; tert-butyl cyclohexyl methacrylate; tricyclodecanedimethanol diacrylate; tricyclodecanedimethanol dimethacrylate; isodecyl acrylate; isodecyl methacrylate; isooctyl acrylate; isooctyl methacrylate; stearyl acrylate; stearyl methacrylate; isobornyl acrylate; isobornyl methacrylate; 1,12-dodecanediol diacrylate; 1,12-dodecanediol dimethacrylate; lauryl acrylate; lauryl methacrylate; tridecyl acrylate; tridecyl methacrylate; octyl/decyl acrylate; octyl/decyl methacrylate; caprolactone acrylate; caprolactone methacrylate; neopentyl glycol diacrylate; neopentyl glycol dimethacrylate; or combinations thereof. A non-limiting, exemplary hydrophobic (meth)acrylate monomer that may be comprised in multistage polymer particle masterbatch compositions prepared by the methods herein may include a tricyclodecanedimethanol diacrylate.

Multistage polymer particle masterbatch compositions prepared by the methods herein may include from 60% to 99% by weight (meth)acrylate monomer; and from 1% to 40% by weight multistage polymer particles dispersed in the (meth)acrylate monomer. Unless otherwise specified, the weight amounts of (meth)acrylate monomer and multistage polymer particles are based on the total weight of the multistage polymer particle masterbatch compositions.

In some embodiments, the multistage polymer particle masterbatch compositions prepared by the methods herein include from 60% to 99% by weight hydrophobic (meth)acrylate monomer having a Hansen solubility parameter polarity component $\delta_P$ less than 10.5 MPa$^{1/2}$; and from 1% to 40% by weight multistage polymer particles dispersed in the hydrophobic (meth)acrylate monomer.

In example embodiments, the multistage polymer particle masterbatch compositions may include from 70% to 99% by weight, or from 75% to 99% by weight, or from 80% to 99% by weight, or from 85% to 99% by weight, or from 90% to 99% by weight, or from 60% to 95% by weight, or from 60% to 90% by weight, or from 60% to 85% by weight, or from 60% to 80%, or from 60% to 75% by weight, or from 60% to 70% by weight, or from 70% to 90% by weight, or from 70% to 85% by weight, or from 70% to 80% by weight, or from 80% to 95% by weight, or from 80% to 90% by weight, or from 90% to 95% by weight (meth)acrylate monomer or hydrophobic (meth)acrylate monomer, based on the total weight of the multistage polymer particle masterbatch compositions.

Multistage Polymer Particles

The multistage polymer particles of the multistage polymer particle masterbatch compositions have at least three layers configured as a core layer, an inner shell layer around the core layer, and an outer shell layer around the inner shell layer.

The core layer is composed of a rubbery polymer material. The core layer includes a core polymer having a glass transition temperature of less than 10 °C. In examples, the glass transition temperature Tg of the core polymer may be from -100 °C to less than 10 °C, or from -90°C to 0 °C, or from -80 °C to -10 °C, or from -70°C to -20 °C.

Non-limiting examples of core polymers are polymers composed of residues of monomers chosen from methyl acrylate, propyl acrylate, isopropyl acrylate, butyl acrylate, tert-butyl acrylate, methyl methacrylate, ethyl methacrylate, butyl methacrylate, isoprene, butadiene, or combinations of the foregoing. Further non-limiting examples of core polymers include polymers composed of residues of isoprene and butadiene in combination with a vinyl monomer residue chosen from styrene, alkylstyrene, acrylonitrile, or alkyl (meth)acrylate, where the vinyl monomer residue is up to 98 wt.% of the core polymer. A specific example of a core polymer is a homopolymer of butyl acrylate. Another specific example of a core polymer is a butadiene homopolymer.

In further non-limiting examples, the core polymer include at least 50 wt%, at least 60 wt.%, or at least 70 wt.% of polymeric units coming from alkyl acrylate or alkyl acrylates, based on the weight of the core polymer. The core polymer may include an acrylic monomer chosen from $C_1$ to $C_{18}$ alkyl acrylates or mixtures thereof. More preferably the core polymer may include a residue of an acrylic monomer chosen from monomers of $C_2$ to $C_{12}$ alkyl acrylic monomers or mixtures thereof. Still more preferably the acrylic monomer core polymer may include a residue of an acrylic monomer chosen from monomers of $C_2$ to $C_8$ alkyl acrylic monomers or mixtures thereof. The core polymer may include a comonomer or comonomers that are copolymerizable with the acrylic monomer, as long as core polymer has a glass transition temperature less than 10 °C. The monomer residues in the core polymer are preferably chosen from (meth)acrylic monomer residues, vinyl monomers residues or combinations thereof.

The inner shell layer is generally an intermediate layer of a material compatible to adhere well to the core layer and to which the outer shell adheres well. The inner shell layer includes an inner shell polymer surrounding the core polymer and having a glass transition temperature of at least 60 °C. In examples, the glass transition temperature $T_g$ of the inner shell polymer is from 60 °C to 150°C, or from 80 °C to 150 °C or from 90 °C to 150 °C, or from 100 °C to 150 °C.

In non-limiting examples, the inner shell polymer includes at least 50 wt% or at least 60 wt.% residues of methyl methacrylate, based on the weight of the inner shell polymer. Non-limiting examples of inner shell polymers include polymers composed of residues of methyl (meth)acrylate, methyl methacrylate, ethyl (meth)acrylate, ethyl methacrylate, butyl (meth)acrylate, butyl methacrylate, or combinations thereof. The inner shell polymer may be crosslinked, but need not be crosslinked.

The outer shell layer includes an outer shell polymer surrounding the inner shell polymer and having a glass transition temperature of at least 30 °C. Preferably the glass transition temperature of the outer shell polymer is from 30 °C to 150 °C or from 40 °C to 150°C, or from 45 °C to 150 °C, or from 50 °C to 150 °C. The outer shell layer may constitute from 5% to 30% by weight, or from 5% to 20% by weight of total weight of the multistage polymer particle.

Non-limiting examples of outer shell polymers include polymers composed of residues of alkyl acrylates, alkyl methacrylates, cyclohexyl acrylate, cyclohexyl methacrylate, 4-tertbutyl cyclohexyl acrylate, 4-tertbutyl cyclohexyl methacrylate, bornyl acrylate, bornyl methacrylate, norbornyl acrylate, norbornyl methacrylate, isobornyl acrylate, isobornyl methacrylate, fenchyl acrylate, fenchyl methacrylate, dicyclopentanyl acrylate, dicyclopentanyl methacrylate, dicyclopentenyl acrylate, dicyclopentenyl methacrylate, adamantyl acrylate, adamantyl methacrylate, dimethyl adamantyl acrylate, dimethyl adamantyl methacrylate, cyclodecyl acrylate, cyclodecyl methacrylate, cyclodecyl acrylate, cyclodecyl methacrylate, or combinations thereof.

In some embodiments, outer shell layer includes an outer shell polymer that is a hydrophobic polymer that is a polymer comprising at least 50 wt.% or at least 60 wt.% (meth)acrylate monomer residues, based on the weight of the hydrophobic polymer.

In some embodiments, the outer shell layer includes an outer shell polymer that is a hydrophobic polymer that is a polymer comprising or consisting of monomer residues of at least one monomer having a Hansen solubility parameter polarity component $\delta_P$ less than 10.5 MPa$^{1/2}$. In principle, when the outer shell polymer is a hydrophobic polymer, the outer shell polymer functions as a hydrophobic modification to the combination of the core layer and the inner shell layer and thereby contributes to compatibilities of the multistage polymer particles with hydrophobic (meth)acrylate monomers that facilitate increased miscibility and dispersibility of the multistage polymer particles in the hydrophobic (meth)acrylate monomer.

Non-limiting examples of hydrophobic outer shell polymers include polymers composed of residues of cyclohexyl acrylate, cyclohexyl methacrylate, 4-tertbutyl cyclohexyl acrylate, 4-tertbutyl cyclohexyl methacrylate, bornyl acrylate, bornyl methacrylate, norbornyl acrylate, norbornyl methacrylate, isobornyl acrylate, isobornyl methacrylate, fenchyl acrylate, fenchyl methacrylate, dicyclopentanyl acrylate, dicyclopentanyl methacrylate, dicyclopentenyl acrylate, dicyclopentenyl methacrylate, adamantyl acrylate, adamantyl methacrylate, dimethyl adamantyl acrylate, dimethyl adamantyl methacrylate, cyclodecyl acrylate, cyclodecyl methacrylate, cyclodecyl acrylate, cyclodecyl methacrylate, or combinations thereof.

The outer shell polymer typically has a weight-average molecular weight from 10,000 g/mol to 500,000 g/mol, or from 15,000 g/mol to 450,000 g/mol, or from 16,000 g/mol to 400 000 g/mol, or from 17 000g/mol to 350 000g/mol, or from 18,000 g/mol to 300,000 g/mol, or from 19,000 g/mol to 250,000 g/mol, or from 20,000 g/mol to 200,000 g/mol.

The multistage polymer particles of multistage polymer particle masterbatches prepared by methods disclosed herein may have a weight average particle size from 15 nm to 900 nm. Preferably the weight average particle size of the polymer particle is from 20 nm to 800 nm, more preferably between, more preferably from 25 nm to 600 nm, still more preferably from 30 nm to 550 nm, again still more preferably from 35 nm to 500 nm, advantageously from 40 nm to 400 nm, even more advantageously from 75 nm to 350 nm and advantageously from 80 nm to 300 nm. If the particle size of the multistage polymer particle is greater than 900 nm, the resulting multistage polymer particle masterbatch may not be a suitably uniform or homogeneous dispersion in the same manner as large particulate aggregates in a masterbatch dispersion are disadvantageous for further processing or polymerization reactions.

The multistage polymer particles of multistage polymer particle masterbatches prepared by methods disclosed herein may be powders having a volume median particle size D50 from 1 $\mu$m to 700 $\mu$m. Preferably the volume median particle size of the polymer powder is from 10 $\mu$m to 600 $\mu$m, more preferably from 15 $\mu$m to 550 $\mu$m and advantageously from 20 $\mu$m to 500 $\mu$m. The D10 of the particle size distribution in volume is at least 7 $\mu$m and preferably 10 $\mu$m, more preferably 15 $\mu$m. The D90 of the particle size distribution in volume is at most 1000 $\mu$m and preferably 950 $\mu$m, more preferably at most 900 $\mu$m and even more preferably at most 800 $\mu$m. The apparent bulk density of the multistage polymer particle powder is less than 0.60 g/cm$^3$. Preferably the apparent bulk density is less than 0.45 g/cm$^3$, more preferably less than 0.43 g/cm$^3$, and even more preferably less than 0.41 g/cm$^3$. The apparent bulk density of the multistage polymer particle powder is more than 0.1 g/cm$^3$. Preferably the apparent bulk density is more than 0.11 g/cm$^3$, more preferably is more than 0.12 g/cm$^3$, even more preferably more than 0.13 g/cm$^3$. The apparent bulk density of the multistage polymer particle powder is from 0.1 g/cm$^3$ to 0.60 g/cm$^3$. Preferably the apparent bulk density of the multistage polymer particle powder is from 0.15 g/cm$^3$ to 0.45 g/cm$^3$. Advantageously the apparent bulk density of the multistage polymer particle powder is from 0.2 g/cm$^3$ to 0.4 g/cm$^3$.

The multistage polymer particles of the multistage polymer particle masterbatches prepared by methods disclosed herein may be prepared by polymerizing by emulsion polymerization of a first monomer or monomer mixture to obtain the core layer; then polymerizing by emulsion polymerization of a second monomer or monomer mixture to obtain the inner core layer; then polymerizing by emulsion polymerization a third monomer or monomer mixture to obtain the outer shell layer.

The emulsion polymerization steps for preparing the individual layers may include emulsifying monomers or monomer mixtures in non-active ingredients such as emulsifiers or surfactants. The non-active ingredients may include, for example, beef tallow fatty acid potassium salts, mercaptans, p-menthane hydroperoxide, sodium tetrapyrophosphate, ferrous sulfate ($FeSO_4$), dextrose, sodium formaldehyde sulfoxylate, oleic acid, potassium hydroxide, octadecyl-3-(3,5-di-tertbutyl-4-hydroxyphenyl)propionate, ethylenediaminetetraacetic acid sodium salt, or other customary reagents. Owing to these non-active ingredients, the multistage polymer particles may include, in addition to the polymers, detectable levels of contaminant species such as iron, potassium, sodium, phosphorus, and/or sulfur.

In a specific non-limiting example of a multistage polymer particle of the multistage polymer particle masterbatches prepared by methods disclosed herein, the multistage polymer particles include a core polymer that is or includes a butadiene homopolymer or a butadiene copolymer; an inner shell polymer that is or includes a copolymer of methyl methacrylate and divinyl benzene; and an outer shell polymer that is or includes methyl methacrylate having a Hansen solubility parameter polarity component $\delta_P$ greater than 10.5 MPa$^{1/2}$. With these exemplary particles, when the (meth)acrylate monomer has a Hansen solubility parameter polarity component $\delta_P$ less than 10.5 MPa$^{1/2}$, the multistage polymer particle masterbatch composition may include from 80% to 99% by weight of (meth)acrylate monomer, preferably a hydrophobic (meth)acrylate monomer, and from 1% to 20% by weight of multistage polymer particles dispersed in the (meth)acrylate monomer, preferably the hydrophobic (meth)acrylate monomer.

In a specific non-limiting example of a multistage polymer particle of the multistage polymer particle masterbatches prepared by methods disclosed herein, the multistage polymer particles include a core polymer that is or includes a butadiene homopolymer or a butadiene copolymer; an inner shell polymer that is or includes a copolymer of methyl methacrylate and divinyl benzene; and an hydrophobic outer shell polymer that is or includes isobornyl methacrylate. With these exemplary multistage polymer particles, the multistage polymer particle masterbatch composition may include from 60% to 99% by weight of a (meth)acrylate monomer, preferably a hydrophobic (meth)acrylate monomer having a Hansen solubility parameter polarity component $\delta_P$ less than 10.5 MPa$^{1/2}$, and from 1% to 40% by weight multistage polymer particles dispersed in the (meth)acrylate monomer, preferably the hydrophobic (meth)acrylate monomer.

In non-limiting specific examples of multistage polymer particle masterbatches prepared by methods disclosed herein, the outer shell polymer comprises monomer residues of at least one monomer having a Hansen solubility parameter polarity component $\delta_P$ less than 10.5 MPa$^{1/2}$; and the (meth)acrylate monomer is a hydrophobic (meth)acrylate monomer having a Hansen solubility parameter polarity component $\delta_P$ less than 10.5 MPa$^{1/2}$.

In a very specific example, the multistage polymer particle masterbatch may include the core polymer is or includes a butadiene homopolymer or a butadiene copolymer; the inner shell polymer is or includes a copolymer of methyl methacrylate and divinyl benzene; the outer shell polymer is or includes isobornyl methacrylate; and the (meth)acrylate monomer is a hydrophobic (meth)acrylate monomer that is or includes a tricyclodecanedimethanol diacrylate.

In example embodiments, the multistage polymer particle masterbatch compositions may include from 1% to 30% by weight, or from 1% to 25% by weight, or from 1% to 20% by weight, or from 1% to 15% by weight, or from 1% to 10% by weight, or from 5% to 40% by weight, or from 10% to 40% by weight, or from 15% to 40% by weight, or from 20% to 40%, or from 25% to 40% by weight, or from 30% to 40% by weight, or from 10% to 30% by weight, or from 15% to 30% by weight, or from 20% to 30% by weight, or from 5% to 20% by weight, or from 10% to 20% by weight, or from 5% to 10% by weight multistage polymer particles, based on the total weight of the multistage polymer particle masterbatch compositions.

In example embodiments, when the outer shell polymer of the multistage polymer particles has a Hansen solubility parameter polarity component $\delta_P$ less than 10.5 MPa$^{1/2}$ and the (meth)acrylate monomer also has a Hansen solubility parameter polarity component $\delta_P$ less than 10.5 MPa$^{1/2}$, the multistage polymer particle masterbatch composition may include up to 40% by weight, or from 1% to 40% by weight multistage polymer particles, based on the total weight of the multistage polymer particle composition.

In further example embodiments, when the outer shell polymer of the multistage polymer particles has a Hansen solubility parameter polarity component $\delta_P$ greater than 10.5 MPa$^{1/2}$ while the (meth)acrylate monomer has a Hansen solubility parameter polarity component $\delta_P$ less than 10.5 MPa$^{1/2}$, the multistage polymer particle masterbatch composition may include up to 20% by weight, or from 1% to 20% by weight multistage polymer particles, based on the total weight of the multistage polymer particle composition.

In non-limiting specific examples of multistage polymer particle masterbatch compositions prepared by methods disclosed herein, the outer shell polymer comprises monomer residues of monomers having a Hansen solubility parameter polarity component $\delta_P$ less than 10.5 MPa$^{1/2}$; the (meth)acrylate monomer is a hydrophobic (meth)acrylate monomer having a Hansen solubility parameter polarity component $\delta_P$ less than 10.5 MPa$^{1/2}$; and the multistage polymer particle masterbatch composition comprises from 60% to 99% by weight hydrophobic (meth)acrylate monomer having a Hansen solubility parameter polarity component $\delta_P$ less than 10.5 MPa$^{1/2}$ and from 1% to 40% by weight multistage polymer particles dispersed in the hydrophobic (meth)acrylate monomer, based on the total weight of the multistage polymer particle composition.

In non-limiting specific examples of multistage polymer particle masterbatch compositions prepared by methods disclosed herein, the outer shell polymer comprises monomer residues of monomers having a Hansen solubility parameter polarity component $\delta_P$ greater than 10.5 MPa$^{1/2}$; the (meth)acrylate monomer is a hydrophobic (meth)acrylate monomer having a Hansen solubility parameter polarity component $\delta_P$ less than 10.5 MPa$^{1/2}$; and the multistage polymer particle masterbatch composition comprises from 80% to 99% by weight hydrophobic (meth)acrylate monomer having a Hansen solubility parameter polarity component $\delta_P$ less than 10.5 MPa$^{1/2}$ and from 1% to 20% by weight multistage polymer particles dispersed in the hydrophobic (meth)acrylate monomer, based on the total weight of the multistage polymer particle composition.

The (meth)acrylate monomer and the multistage polymer particles may constitute the entire weight of the multistage polymer particle masterbatch composition or may be constitute only a portion of the multistage polymer particle masterbatch composition in addition to a solvent, such as water, and optionally one or more additives incapable of initiating polymerization of the multistage polymer particle masterbatch. In embodiments, the multistage polymer particle masterbatch is not polymerizable on its own by any customary polymerization method, unless and until an initiator or other polymerization catalyst is added to the multistage polymer particle masterbatch.

The multistage polymer particle masterbatches prepared by methods disclosed herein typically have a viscosity from 100 cP to 200,000 cP or from 1000 cP to 15,000 cP.

**Method for Preparing Multistage Polymer Particle Masterbatch Compositions**

Having described the multistage polymer particle masterbatch compositions to be prepared, methods for preparing the multistage polymer particle masterbatches will now be described.

The multistage polymer particle masterbatch compositions as previously described are prepared by a solvent-exchange process. The solvent-exchange process involves generally beginning with an aqueous latex dispersion of multistage polymer particles, then gradually over several steps, replacing the water of the aqueous latex with an organic solvent until a dispersion of the multistage polymer particles is obtained.

In particular, the solvent-exchange process may comprise the following steps:

(a) adding an organic solvent to an aqueous dispersion comprising multistage polymer particles and water, the organic solvent being at least partially miscible in the water;
(b) increasing a ratio of the organic solvent to the water in the aqueous dispersion by removing liquids from the aqueous dispersion and subsequently replacing the liquids with additional portions of the organic solvent to obtain an organic-solvent based dispersion comprising the multistage polymer particles, the organic solvent, and residual water;
(c) adding at least one (meth)acrylate monomer to the organic-solvent based dispersion; and
(d) removing the organic solvent and residual water from the organic-solvent based dispersion to obtain the multistage polymer particle masterbatch composition.

Step (a) of the method for preparing the multistage polymer particle masterbatch composition includes adding an organic solvent to an aqueous dispersion containing the multistage polymer particles and water. The aqueous dispersion may be a dispersion prepared by any customary method of preparing polymer powder latexes. For example, the aqueous dispersion may be a polymer dispersion or latex of the multistage polymer particles having been prepared by combining the multistage polymer particles with a volume of water sufficient to wet the particles, then the combination may be mixed until the particles are uniformly wetted and dispersed in the water. A typical aqueous dispersion may have a solids content of 10% to 60% by weight, or from 10% to 50% by weight, or from 10% to 40% by weight, or from 10% to 30% by weight, or from 20% to 60% by weight, or from 30% to 60% by weight, or from 20% to 50% by weight, or from 20% to 40% by weight, based on the weight of the aqueous dispersion.

The organic solvent is at least partially miscible in the water. Addition of the organic solvent, followed by mixing, causes formation of agglomerates of the multistage polymer particles that may float in the liquid.

Non-limiting examples of organic solvents include ketones such as methyl ethyl ketone; esters such as methyl formate, methyl acetate, and ethyl acetate; ethers such as diethyl ether, ethylene glycol diethyl ether, and tetrahydropyrane; acetals, and alcohols such as isobutyl alcohol, and sec-butyl alcohol. The organic solvents may be used alone or in combination. For example, an organic solvent mixture may be a combination of two or more selected from low water-soluble organic solvents and high water-soluble organic solvents; examples of the low water-soluble organic solvent may include ketones such as methylpropylketone, diethylketone, methylisobutylketone, and ethylbutylketone; esters such as diethylcarbonate, butyl formate, propyl acetate, and butyl acetate; ethers such as diisopropyl ether, and dibutyl ether; aliphatic hydrocarbons such as pentane, hexane, heptane, and octane; aromatic hydrocarbons such as benzene, toluene, and xylene; and halogenated hydrocarbons such as methylene chloride, and chloroform; and examples of the high water-soluble organic solvent may include ketones such as acetone, and cyclohexanone; esters such as $\gamma$-

valerolactone, and ethylenglycol monomethylether acetate; alcohols such as ethanol, isopropylalcohol, and t-butylalcohol; and tetrahydrofuran. In example embodiments, the organic solvent is methylethyl ketone.

The organic solvent may be added at a volume ratio of organic solvent to aqueous dispersion from 10: 1 to 1:10, or from 5:1 to 1:5, or from 3:1 to 1:3, or from 2: 1 to 1:2, or from 1.5: 1 to 1:1.5, or from 0.5:1 to 1.5:1, or from 0.6: 1 to 1.4:1, or from 0.7: 1 to 1.3:1, or from 0.8: 1 to 1.2:1, or from 0.9: 1 to 1.1:1, or about 1: 1.

Step (b) of the method for preparing the multistage polymer particle masterbatch composition includes increasing a ratio of the organic solvent to the water in the aqueous dispersion by removing liquids from the aqueous dispersion and subsequently replacing the liquids with additional portions of the organic solvent to obtain an organic-solvent based dispersion comprising the multistage polymer particles, the organic solvent, and residual water. By this procedure, the water that was the initial solvent of the aqueous dispersion is substantially exchanged for the organic solvent to obtain the organic-solvent based dispersion.

In examples, from the aqueous dispersion that contains the multistage polymer particles, water, and organic solvent, liquids (i.e., water and organic solvent) are removed by separation, for example, leaving behind a slurry of multistage polymer particles. To this slurry, organic solvent is added, then the resulting mixture is agitated. The liquid phase of the mixture contains a substantially greater fraction of organic solvent than did the aqueous dispersion after the first amount of organic solvent was added. Even so, the liquid still contains residual water.

Thereupon, to continue the solvent exchange, the liquids are again separated from the solids. From one to ten further additions of organic solvent, agitation, and draining may be made before adding the (meth)acrylate monomer to the organic-solvent based dispersion. After the final repeat of step (b), organic solvent may be added to the particles to redisperse the particles into an organic-solvent based dispersion. The organic-solvent based dispersion may have a residual water content of less than 10% by weight, less than 5% by weight, less than 4% by weight, less than 3% by weight, less than 2% by weight, less than 1% by weight, less than 0.5% by weight, less than 0.1% by weight, or less than 0.01% by weight, based on the weight of the organic-solvent based dispersion.

In step (c) of the method for preparing the multistage polymer particle masterbatch composition, a (meth)acrylate monomer, which may be a hydrophobic (meth)acrylate monomer as previously described, is added to the organic-solvent based dispersion. The (meth)acrylate monomer may be a mixture of (meth)acrylate monomers. The (meth)acrylate monomer(s) may be added in a sufficient amount, such that the organic-solvent based dispersion has a total solids content from 10% to 80% by weight, based on the sum of the solids weight of the multistage polymer particles and the solids weight of the (meth)acrylate monomer(s).

Step (d) of the method for preparing the multistage polymer particle masterbatch composition includes removing the organic solvent and residual water from the organic-solvent based dispersion to obtain the multistage polymer masterbatch composition. The organic solvent and residual water may be removed by any customary method of removing liquids from solids, such as by gentle heating at a reduced pressure, optionally with agitation.

Optionally, the method for preparing the multistage polymer particle masterbatch composition may further include adding an acid, chosen from organic acids or inorganic acids. The acid may be added to the aqueous dispersion either before adding the organic solvent in step (a) or after adding the organic solvent in step (a) but before removing liquids in step (b). Adding the acid may include combining from 30 parts to 70 parts by weight aqueous dispersion and from 30 parts to 70 parts by weight aqueous solution to obtain 100 parts by weight acid-treated dispersion. The aqueous solution containing the acid may have a concentration of 0.001% to 10% by weight acid. That is, the aqueous solution may include from 0.001% to 10% by weight acid, or preferably from 0.05% to 5% acid, more preferably from 0.5% to 3% by weight acid, based on the total weight of the aqueous solution.

When the optional addition of acid is included in the method for preparing the multistage polymer particle masterbatch composition, the acid may be a strong acid or a weak acid. Preferably, the acid is a weak acid that does not fully dissociate in the aqueous solution. Example strong acids include hydrochloric acid and nitric acid. Non-limiting example weak acids include carboxylic acids, alkanoic acids, organic boric acids, organic phosphonic acids, organic phosphoric acids, organic sulfonic acids, or combinations thereof. Further non-limiting example weak acids include carboxylic acids such as lactic acid, acetic acid, formic acid, citric acid, oxalic acid, uric acid, malic acid, tartaric acid, (meth)acrylic acid, or combinations thereof. As a specific non-limiting example, the acid is or includes acetic acid. As a more specific non-limiting example, the acid is acetic acid, and the aqueous solution is mixture of water and acetic acid that is from 0.001% to 10% by weight acetic acid, preferably from 0.05% to 5% acetic acid, more preferably or from 0.5% to 3% by weight acetic acid, based on the total weight of the aqueous solution.

Multistage polymer particle masterbatch compositions prepared by the method described herein are uniform, homogeneous dispersions. Remarkably, when the outer shell layer of the multistage polymer particles is a hydrophobic (meth)acrylate polymer and the (meth)acrylate monomer added to the multistage polymer particles during the method is a hydrophobic (meth)acrylate monomer, the homogeneity of the resulting masterbatch composition is significantly greater than that obtained with customary methods that include spray drying an initial latex to form aggregates, performing a size reduction, then redispersing particles into a monomer.

Numerous core-sell rubber particles do not have the ability to disperse in certain acrylic monomers. The ability of a core-shell particle to disperse in an acrylic monomer depends on the solubility parameter of the core-shell particle, and how closely it matches the solubility parameter of the acrylic monomer. Certain hydrophobic monomers can cause core-shell particles to either swell or agglomerate. Agglomerations of particles act as stress concentrators due to their larger size. Agglomerations can have a detrimental effect on performance. Toughening of an acrylic material with core-shell particles requires that the particles are fully dispersed in the acrylic resin continuous phase. Naturally, this morphology requires a successful dispersion of core-shell particles in the acrylic resin composition prior to polymerization. A key aspect of using core-shell particles in light and peroxide curable thermoset compositions is ensuring that the formulation has high dispersion quality.

**Curable Compositions**

The multistage polymer particle masterbatch compositions prepared by the method of the invention may be combined with one or more initiators to provide a curable composition. Accordingly, curable compositions may include the multistage polymer particle masterbatch composition in combination with at least one initiator. Examples of initiators include thermal initiators and photoinitiators.

Non-limiting types of radical photo-initiators suitable for use in the curable compositions of the present disclosure include, for example, benzoins, benzoin ethers, acetophenones, $\alpha$-hydroxy acetophenones, benzyl, benzyl ketals, anthraquinones, phosphine oxides, acylphosphine oxides, $\alpha$-hydroxyketones, phenylglyoxylates, $\alpha$-aminoketones, benzophenones, thioxanthones, xanthones, acridine derivatives, phenazene derivatives, quinoxaline derivatives, triazine compounds, benzoyl formates, aromatic oximes, metallocenes, acylsilyl or acylgermanyl compounds, camphorquinones, polymeric derivatives thereof, and mixtures thereof.

Examples of suitable radical photo-initiators may include, but are not limited to, 2-methylanthraquinone, 2-ethylanthraquinone, 2-chloroanthraquinone, 2-benzyanthraquinone, 2-t-butylanthraquinone, 1,2-benzo-9,10-anthraquinone, benzyl, benzoins, benzoin ethers, benzoin, benzoin methyl ether, benzoin ethyl ether, benzoin isopropyl ether, alpha-methylbenzoin, alpha-phenylbenzoin, Michler's ketone, acetophenones such as 2,2-dialkoxybenzophenones and 1-hydroxyphenyl ketones, benzophenone, 4,4'-bis-(diethylamino) benzophenone, acetophenone, 2,2-diethyloxyacetophenone, diethyloxyacetophenone, 2-isopropylthioxanthone, thioxanthone, diethyl thioxanthone, 1,5-acetonaphthylene, benzil ketone, $\alpha$-hydroxy keto, 2,4,6-trimethylbenzoyldiphenyl phosphine oxide, benzyl dimethyl ketal, 2,2-dimethoxy-1,2-diphenylethanone, 1-hydroxycylclohexyl phenyl ketone, 2-methyl-1-[4-(methylthio) phenyl]-2-morpholinopropanone-1, 2-hydroxy-2-methyl-1-phenyl-propanone, oligomeric $\alpha$-hydroxy ketone, benzoyl phosphine oxides, phenyl-bis(2,4,6-trimethylbenzoyl)phosphine oxide, ethyl(2,4,6-trimethylbenzoyl)phenyl phosphinate, anisoin, anthraquinone, anthraquinone-2-sulfonic acid, sodium salt monohydrate, (benzene) tricarbonylchromium, benzil, benzoin isobutyl ether, benzophenone/1-hydroxycyclohexyl phenyl ketone, 50/50 blend, 3,3',4,4'-benzophenonetetracarboxylic dianhydride, 4-benzoylbiphenyl, 2-benzyl-2-(dimethylamino)-4'-morpholinobutyrophenone, 4,4'-bis(diethylamino)benzophenone, 4,4'-bis(dimethylamino)benzophenone, camphorquinone, 2-chlorothioxanthen-9-one, dibenzosuberenone, 4,4'-dihydroxybenzophenone, 2,2-dimethoxy-2-phenylacetophenone, 4-(dimethylamino)benzophenone, 4,4'-dimethylbenzil, 2,5-dimethylbenzophenone, 3,4-dimethylbenzophenone, diphenyl(2,4,6-trimethylbenzoyl)phosphine oxide /2-hydroxy-2-methylpropiophenone, 50/50 blend, 4'-ethoxyacetophenone, 2,4,6-trimethylbenzoyldiphenylphophine oxide, phenyl bis(2,4,6-trimethyl benzoyl)phosphine oxide, ferrocene, 3'-hydroxyacetophenone, 4'-hydroxyacetophenone, 3-hydroxybenzophenone, 4-hydroxybenzophenone, 1-hydroxycyclohexyl phenyl ketone, 2-hydroxy-2-methylpropiophenone, 2-methylbenzophenone, 3-methylbenzophenone, methybenzoylformate, 2-methyl-4'-(methylthio)-2-morpholinopropiophenone, phenanthrenequinone, 4'-phenoxyacetophenone, (cumene)cyclopentadienyl iron(ii) hexafluorophosphate, 9,10-diethoxy and 9,10-dibutoxyanthracene, 2-ethyl-9,10-dimethoxyanthracene, thioxanthen-9-one and combinations thereof.

In particular, suitable photo-initiators may include a benzophenone (such as Speedcure BP, Speedcure 7005, Speedcure 7006), a thioxanthone (such as Speedcure 7010, Speedcure ITX), an $\alpha$-hydroxy acetophenone, an acylphosphine oxide (such as Speedcure BPO, Speedcure TPO, Speedcure TPO-L); each of which is available from Sartomer USA, LLC.

The curable compositions may include up to 15 wt. % of the photo-initiator, based on the total weight of the actinically-curable composition. For example, the actinically-curable composition may include from 0.1 wt. % to 15 wt. %, from 0.1 wt. % to 10 wt. %, from 0.1 wt. % to 8 wt. %, from 0.1 wt. % to 6 wt. %, from 0.1 wt. % to 4 wt. %, from 0.1 wt. % to 3 wt. %, from 0.1 wt. % to 2 wt. %, from 0.1 wt. % to 1.5 wt. %, from 0.1 wt. % to 1 wt. %, from 0.1 wt. % to 0.75 wt. %, from 0.1 wt. % to 0.5 wt. %, from 0.5 wt. % to 10 wt. %, from 0.5 wt. % to 5 wt. %, from 0.5 wt. % to 2.5 wt. %, from 0.5 wt. % to 2 wt. %, from 0.5 wt. % to 1.5 wt. %, from 0.5 wt. % to 1 wt. %, or any subset thereof, of the photo-initiator, based on the total weight of the actinically-curable composition.

The curable composition may further include a photocurable component. The photocurable component comprises at least one photocurable monomer or oligomer. The photocurable component may comprise a mixture of photocurable monomers and/or oligomers. Non-limiting examples of photocurable monomers and oligomers include (meth)acrylate monomers; (meth)acrylate oligomers such as epoxy (meth)acrylates, polyester (meth)acrylates, polyether (meth)acrylates, urethane (meth)acrylates, or (meth)acrylated poly(meth)acrylates; ethylenically unsaturated compounds other than a (meth)acrylate-functionalized monomer or oligomer; cationically polymerizable compounds such as epoxides, oxetanes, alcohols or vinyl ethers; or combinations thereof. In a preferred embodiment, the photocurable component comprises at least one (meth)acrylate monomer and at least one (meth)acrylate oligomer.

The photocurable component may comprise a (meth)acrylate monomer. The photocurable component may comprise a mixture of (meth)acrylate monomers. Examples of suitable (meth)acrylate monomers are as described above for the multistage polymer particle masterbatch composition. The (meth)acrylate monomer of the photocurable component is advantageously distinct from the (meth)acrylate monomer comprised in the multistage polymer particle masterbatch composition. For example, if the (meth)acrylate monomer of the multistage polymer particle masterbatch composition comprises a hydrophobic (meth)acrylate monomer, the photocurable component may comprise one or more (meth)acrylate monomers other than the hydrophobic (meth)acrylate monomer of the multistage polymer particle masterbatch composition.

The photocurable component may comprise a (meth)acrylate oligomer. The photocurable component may comprise a mixture of (meth)acrylate oligomers. The (meth)acrylate oligomer may have 1 to 18 (meth)acrylate groups, in particular 2 to 6 (meth)acrylate groups, more particularly 2 to 6 acrylate groups. In particular, the (meth)acrylate oligomer may be selected from the group consisting of epoxy (meth)acrylates, polyester (meth)acrylates, polyether (meth)acrylates, urethane (meth)acrylates, (meth)acrylated poly(meth)acrylates and combinations thereof. In particular, the (meth)acrylate oligomer may be selected from the group consisting of epoxy (meth)acrylates, polyester (meth)acrylates, polyether (meth)acrylates, (meth)acrylated poly(meth)acrylates, including the amine-modified and sulfide-modified derivatives of the aforementioned compounds, and combinations thereof.

Non-limiting examples of epoxy (meth)acrylates are the reaction products of an epoxide (such as glycidyl ethers, glycidyl esters, cycloaliphatic epoxides or epoxides obtained by epoxidation of mono- and/or polyunsaturated compounds) with a (meth)acrylating agent (such as (meth)acrylic acid, (meth)acrylic anhydride, (meth)acryloyl chloride or combinations thereof). The epoxide may be selected from 1,2,3,4-diepoxybutane; 1,2,4,5-diepoxypentane; 1,2,5,6-diepoxyhexane; 1,2,7,8-diepoxyoctane; 1,2,9,10-diepoxydecane; bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolak resin, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexanecarboxylate, 2-(3,4-epoxycyclohexyl-5,5-spiro-3,4-epoxy)cyclohexane-1,4-dioxane, bis(3,4-epoxycyclohexylmethyl)adipate, vinylcyclohexene oxide, 4-vinylepoxycyclohexane, bis(3,4-epoxy-6-methylcyclohexylmethyl)adipate, 3,4-epoxy-6-methylcyclohexy 1-3',4'-epoxy-6'-methylcyclohexanecarboxylate, methylenebis(3,4-epoxycyclohexane), dicyclopentadiene diepoxide, di(3,4-epoxycyclohexylmethyl) ether of ethylene glycol, ethylenebis(3, 4-epoxycyclohexanecarboxylate), ethylene glycol diglycidyl ether, 1,2- or 1,3-propylene glycol diglycidyl ether, 1,2-, 1,3- or 1,4-butanediol diglycidyl ether, 1,5-pentanediol diglycidyl ether, 1,6-hexanediol diglycidyl ether, 1,7-hexanediol diglycidyl ether, 1,8-octanediol diglycidyl ether, 1,9-nonanediol diglycidyl ether, 1,10-decanediol diglycidyl ether, 1,12-dodecanediol diglycidyl ether, 2-methyl-1,3-propanediol diglycidyl ether, neopentyl glycol diglycidyl ether, 2,2-diethyl-1,3-propane diol diglycidyl ether, 3-methyl-1,5-pentanediol diglycidyl ether, 3,3-dimethyl-1,5-pentanediol diglycidyl ether, 2,4-diethyl-1,5-pentanediol diglycidyl ether, 3,3-butylethyl-1,5-pentane diol diglycidyl ether, di-, tri- or tetra(ethylene glycol) diglycidyl ether, di-, tri- or tetra(1,2-propylene glycol) diglycidyl ether, di-, tri- or tetra(1,3-propylene glycol) diglycidyl ether, di-, tri- or tetra(1,4-butylene glycol) diglycidyl ether, a poly(ethylene glycol) diglycidyl ether, a polypropylene glycol) diglycidyl ether, a poly(trimethylene glycol) diglycidyl ether, a poly(tetramethylene glycol) diglycidyl ether, a poly(ethylene glycol-co-propylene glycol) diglycidyl ether, glycerol triglycidyl ether, a polyglycerol polyglycidyl ether, trimethylolmethane triglycidyl ether, trimethylolethane triglycidyl ether, trimethylolpropane triglycidyl ether, di(trimethylolpropane) tetraglycidyl ether, pentaerythritol tetraglycidyl ether, diglycidyl cyclohexanedicarboxylate, cyclohexane diglycidyl ether, cyclohexane-1,4-dimethanol diglycidyl ether, tricyclodecane dimethanol diglycidyl ether, isosorbide diglycidyl ether, pyrocatechol diglycidyl ether, resorcinol diglycidyl ether, cardol diglycidyl ether, phloroglucinol triglycidyl ether, pyrogallol triglycidyl ether, tris(hydroxyphenyl)methane triglycidyl ether, tris(hydroxyphenyl)ethane triglycidyl ether, diglycidyl phthalate, diglycidyl terephthalate, diglycidyl isophthalate, polyglycidyl ethers of a polyether polyol obtained by the addition of one or more alkylene oxides to an aliphatic polyhydric alcohol such as ethylene glycol, propylene glycol, and glycerol, diglycidyl esters of aliphatic long-chain (C6-C22) dibasic acids, monoglycidyl ethers of aliphatic higher alcohols, monoglycidyl ethers of phenol, cresol, butyl phenol, or polyether alcohols obtained by the addition of alkylene oxide to these compounds, glycidyl esters of higher fatty acids, an epoxidized vegetable oil (such as epoxidized soybean oil and epoxidized linseed oil), epoxybutylstearic acid, epoxyoctylstearic acid, epoxidized polybutadiene, triglycidyl isocyanurate and the like.

Non-limiting examples of polyester (meth)acrylates are the reaction products of a hydroxyl group-terminated polyester polyol with a (meth)acrylating agent (such as (meth)acrylic acid, (meth)acrylic anhydride, (meth)acryloyl chloride or combinations thereof). The reaction process may be conducted such that a significant concentration of residual hydroxyl groups remain in the polyester (meth)acrylate or may be conducted such that all or essentially all of the hydroxyl groups of the polyester polyol have been (meth)acrylated. The polyester polyols can be made by polycondensation reactions of a polyhydroxyl functional component (in particular a diol) and a polycarboxylic acid functional compound (in particular, a dicarboxylic acid or anhydride). To prepare the polyester (meth)acrylates, the hydroxyl groups of the polyester polyol are then partially or fully esterified by reacting with the (meth)acrylating agent. Polyester (meth)acrylates may also be synthesized by reacting a hydroxyl-containing (meth)acrylate such as a hydroxyalkyl (meth)acrylate (e.g., hydroxyethyl acrylate) with a polycarboxylic acid. The polyhydroxyl functional and polycarboxylic acid functional components can each have linear, branched, cycloaliphatic or aromatic structures and can be used individually or as mixtures.

Non-limiting examples of polyether (meth)acrylates are the condensation reaction products of a polyetherol which is a polyether polyol with a (meth)acrylating agent (such as (meth)acrylic acid, (meth)acrylic anhydride, (meth)acryloyl chloride or combinations thereof). Suitable polyetherols can be linear or branched substances containing ether bonds and terminal hydroxyl groups. Polyetherols can be prepared by ring opening polymerization of epoxides and other oxygen-containing heterocyclic compounds (e.g., ethylene oxide, 1,2-propylene oxide, butene oxide, tetrahydrofuran and combinations thereof) with a starter molecule. Suitable starter molecules include water, hydroxyl functional materials, polyester polyols and amines. Polyetherols may also be obtained by the condensation of diols such as glycols.

Non-limiting examples of urethane (meth)acrylates are the condensation reaction products of at least one polyisocyanate (e.g., diisocyanate, triisocyanate), at least one polyol (such as a polyether polyol or a polyester polyol) and a hydroxyl-functionalized (meth)acrylate (such as 2-hydroxyethyl (meth)acrylate or 3-hydroxypropyl (meth)acrylate) to provide terminal (meth)acrylate groups. For example, the urethane (meth)acrylate may contain two, three, four or more (meth)acrylate groups per molecule. The order of addition of the components to prepare the urethane (meth)acrylate is well known in the art. For example, the hydroxyl-functionalized (meth)acrylate may be first reacted with the polyisocyanate to obtain an isocyanate-functionalized (meth)acrylate, which is then reacted with the polyol. In yet another embodiment, the polyisocyanate may be first reacted with the polyol to obtain an isocyanate-functionalized polyol, which is thereafter reacted with a hydroxyl-functionalized (meth)acrylate. Alternatively, all the components may be combined and reacted at the same time.

Non-limiting examples of (meth)acrylated poly(meth)acrylates are substances having an oligomeric (meth)acrylic backbone which is functionalized with one or (meth)acrylate groups (which may be at a terminus of the oligomer or pendant to the acrylic backbone). The (meth)acrylic backbone may be a homopolymer, random copolymer or block copolymer comprised of repeating units of (meth)acrylic monomers. The (meth)acrylic monomers may be any monomeric (meth)acrylate such as C1-C6 alkyl (meth)acrylates as well as functionalized (meth)acrylates such as (meth)acrylates bearing hydroxyl, carboxylic acid and/or epoxy groups. (Meth)acrylated poly(meth)acrylates may be prepared using any procedures known in the art, such as by oligomerizing (meth)acrylic monomers, at least a portion of which are functionalized with hydroxyl, carboxylic acid and/or epoxy groups (e.g., hydroxyalkyl(meth)acrylates, (meth)acrylic acid, glycidyl (meth)acrylate) to obtain a functionalized poly(meth)acrylate, which is then reacted with one or more (meth)acrylate-containing reactants to introduce the desired (meth)acrylate functional groups.

The photocurable component may comprise one or more ethylenically unsaturated compounds other than a (meth)acrylate-functionalized monomer or oligomer. Examples of such ethylenically unsaturated compounds include:

- polyvinylic and/or polyallylic monomers (in particular divinyl benzene, 1,4-butanediol divinyl ether, tri(ethylene glycol) divinyl ether, diallyl ether, glycerol diallyl ether, glycerol triallyl ether, trimethylolpropane diallyl ether, trimethylolpropane triallyl ether, pentaerythritol triallyl ether, pentaerythritol tetraallyl ether, diallyl phthalate, triallyl isocyanurate, 2,4,6-triallyloxy-1,3,5-triazine, glyoxal bis(diallyl acetal) and mixtures thereof);
- vinyl esters of carboxylic acids (in particular vinyl acetate, vinyl propionate, vinyl hexanoate, vinyl 2-ethylhexanoate, vinyl octanoate, vinyl pelargonate, vinyl laurate, vinyl stearate, a vinyl ester of versatic acid and mixtures thereof);
- vinyl ethers (in particular vinyl methyl ether, vinyl ethyl ether, vinyl n-butyl ether, vinyl iso-butyl ether and mixtures thereof, ethylene glycol divinyl ether, triethylene glycol divinyl ether and trimethylolpropane trivinyl ether);
- cycloaliphatic vinyl monomers (in particular vinylcyclohexane);
- olefins (in particular ethylene, propene, 1-butene, isobutylene, diisobutylene, 1-nonene, 1-decene and mixtures thereof);
- conjugated dienes (in particular butadiene, isoprene, pentadiene, chlorodiene and mixtures thereof);
- vinyl aromatic monomers (in particular styrene, alpha-methylstyrene, tert-butylstyrene, ortho-, meta-, and para-methylstyrene, ortho-, meta- and para-ethylstyrene, o-methyl-p-isopropylstyrene, p-chlorostyrene, p-bromostyrene, o,p-dichlorostyrene, o,p-dibromostyrene, ortho-, meta- and para-methoxystyrene, optionally substituted indenes, optionally substituted vinylnaphthalenes, acenaphthylene, diphenylethylene, vinyl anthracene and mixtures thereof);
- mono- or dicarboxylic acid monomers, cyclic anhydride monomers and salts thereof (in particular 3-butenoic acid, crotonic acid, vinyl acetic acid, fumaric acid, maleic acid, maleic anhydride, tetrahydrophthalic acid, tetrahydrophthalic anhydride, itaconic acid, mesaconic acid, citraconic acid, glutaconic acid, muconic acid and mixtures thereof);
- unsaturated polymers such as polybutadiene or unsaturated polyesters;
- as well as the alkoxylated (e.g., ethoxylated and/or propoxylated) derivatives thereof;

- and mixtures thereof.

The photocurable component may comprise an oxetane. The photocurable component may comprise a mixture of oxetanes. Non-limiting examples of oxetanes include oxetane itself and substituted derivatives thereof, provided the substituents do not interfere with the desired reaction/polymerization/curing of the oxetane. The substituent(s) may be, for example, alkyl groups, hydroxyalkyl groups, halo, haloalkyl groups, aryl groups, aralkyl groups and the like. The oxetane may be a mono-oxetane (a compound containing a single oxetane ring), a di-oxetane (a compound containing two oxetane rings), a tri-oxetane (a compound containing three oxetane rings) or an oxetane compound containing four or more oxetane rings.

Specific examples of suitable oxetanes include, but are not limited to, oxetane, trimethyolpropane oxetane, 3-ethyl-3-hydroxymethyl oxetane, 1,4-bis[(3-ethyl-3-oxetanylmethoxy)methyl]benzene, 3-ethyl-3-phenoxymethyl oxetane, bis[(1-ethyl(3-oxetanyl))methyl] ether, 3,3-bis (chloromethyl oxetane), 3,3-bis (iodomethyl) oxetane, 3,3-bis(methoxymethyl) oxetane, 3,3-bis(phenoxymethyl) oxetane, 3-methyl-3-chloromethyl oxetane, 3,3-bis(acetoxymethyl) oxetane, 3,3-bis (fluoromethyl) oxetane, 3,3-bis(bromomethyl) oxetane, 3,3-dimethyl oxetane, 3,3'-[1,4-phenylenebis(methyleneoxymethylene)]bis[3-ethyloxetane], 3-ethyl-3-[[(2-ethylhexyl)oxy]methyl]oxetane and the like and combinations thereof. Additional examples of suitable oxetanes are described in the following patent documents, the disclosures of each of which are incorporated herein by reference in its entirety for all purposes: U.S. Pat. Publication No. 2010/0222512 A1, U.S. Pat. Nos. 3,835,003, 5,750,590, 5,674,922, 5,981,616, 6,469,108 and 6,015,914. Suitable oxetanes are available from commercial sources, such as the oxetanes sold by the Toagosei Corporation under the tradenames OXT-221, OXT-121, OXT-101, OXT-212, OXT-211, CHOX, OX-SC and PNOX-1009.

The photocurable component may comprise an epoxide. The photocurable component may comprise a mixture of epoxides. Non-limiting examples of suitable epoxides are as described above for the preparation of epoxy (meth)acrylates.

The photocurable component may comprise a cationically polymerizable alcohol. The photocurable component may comprise a mixture of cationically polymerizable alcohols. Non-limiting examples of cationically polymerizable alcohols include hydroxy-functionalized compounds that contain one or more (meth)acrylate functional groups such as hydroxyalkyl (meth)acrylates (e.g., hydroxyethyl (meth)acrylate, 2- or 3-hydroxypropyl (meth)acrylate, 2-, 3- or 4-hydroxybutyl (meth)acrylate); alkyl glycidyl (meth)acrylates, aryl glycidyl (meth)acrylates and allyl glycidyl (meth)acrylates that have been ring-opened with hydroxyalkyl (meth)acrylates such as hydroxyethyl (meth)acrylate or hydroxypropyl (meth)acrylate; trimethylolpropane mono- and di-(meth)acrylates; pentaerythritol mono-, di-, and tri-(meth)acrylates; dipentaerythritol mono-, di-, tri-, tetra-, and penta-(meth)acrylates; glycerol mono- and di-(meth)acrylates; neopentyl glycol mono(meth)acrylate; alkylenediol mono(meth)acrylates such as hexanediol mono(meth)acrylate; tris(2-hydroxyethyl)isocyanurate mono- and di-(meth)acrylates; alkoxylated (e.g., ethoxylated or propoxylated) versions of all of the above; polyethylene glycol mono(meth)acrylates; polypropylene glycol mono(meth)acrylates; polyethylene/propylene glycol mono(meth)acrylates; polybutylene glycol mono(meth)acrylates; polytetramethylene glycol mono(meth)acrylates; polycaprolactone mono(meth)acrylates (i.e. compounds of formula $HO\text{-}[(CH_2)_5\text{-}C(=O)\text{-}O]_x\text{-}L\text{-}O\text{-}C(=O)\text{-}CR'=CH_2$ in which L is an alkylene or an oxyalkylene, R' is H or methyl, x is 1 to 20); and the like and combinations thereof. Examples of hydroxy-functionalized compounds that contain one or more allyl groups include allyl alcohol, propoxylated and/or ethoxylated allyl alcohols, cinnamyl alcohol, crotyl alcohol, 3-butene-1-ol, 3-butene-2-ol, linalool, 2-cyclohexen-1-ol, 2-cyclopenten-1-ol, 2-butene-1,4-diol, glycerol mono- and di-allyl ethers, trimethylolpropane mono- and di-allyl ethers, and the like.

Further examples of cationically polymerizable alcohols include polyols such as polymeric polyols and non-polymeric polyols. "Polymeric polyols" are polymers bearing two or more isocyanate-reactive hydroxyl groups per molecule. "Non-polymeric polyols" are non-polymeric compounds bearing two or more hydroxyl groups per molecule. Examples of non-polymeric polyols include ethylene glycol, diethylene glycol, triethylene glycol, and tetraethylene glycol. A polyethylene glycol containing five or more oxyalkylene repeating units is an example of a polymeric polyol.

In the polyols, preferably the hydroxyl groups are primary and/or secondary hydroxyl groups. In the case where the polyol is a polymeric polyol, the hydroxyl groups, may be positioned at terminal ends of the polymer. However, it is also possible for hydroxyl groups to be present along the backbone of the polymer or on side chains or groups pendant to the polymer backbone. The polymer portion of the polymeric polyol may be comprised of a plurality of repeating units such as oxyalkylene units, ester units, carbonate units, acrylic units, alkylene units or the like or combinations thereof.

In some examples, polymeric polyols may be represented by the formula HO-R-OH, where R is a polyether (e.g., polyoxyalkylene), polycarbonate, polydiene, polyorganosiloxane, or polyester chain or linker. Particularly preferred polymeric polyols include polyether diols and polyester diols. Suitable polyether diols include, for example, polytetramethylene glycols (hydroxyl-functionalized polymers of tetrahydrofuran) and polyethylene glycols (hydroxyl-functionalized polymers of ethylene oxide). Suitable polyester diols include, for example, poly(caprolactones), poly(lactides), poly(alkylene glycol adipates) and poly(alkylene glycol succinates). Other types of polymeric polyols potentially useful in the present invention include polycarbonate polyols, polyorganosiloxane polyols (e.g., polydimethylsiloxane diols or polyols), and polydiene polyols (e.g., polybutadiene diols or polyol, including fully or partially hydrogenated polydiene polyols).

The molecular weight of the polymeric polyol may be varied as may be needed or desired to achieve particular properties in the cured composition obtained by curing the curable composition. For example, the number average molecular weight of the polymeric polyol may be at least 300, at least 350, or at least 400 g/mol. In other embodiments, the polymeric polyol may have a number average molecular weight of 5000 g/mol or less, 4500 g/mol or less, or 4000 g/mol or less. For example, the polymeric polyol may have a number average molecular weight of 250 to 5000 g/mol, 300 to 4500 g/mol or 350 to 4000 g/mol.

Other types of suitable non-polymeric polyols include, but are not limited to, $C_2$-$C_{12}$ aliphatic polyols, diols, and oligomers thereof (containing up to four oxyalkylene repeating units). The aliphatic polyol or diol may be linear, branched or cyclic in structure, with the hydroxyl groups being both primary or both secondary or one or more of each type (one primary hydroxyl group and one secondary hydroxyl group, for example).

Examples of $C_2$-$C_{12}$ aliphatic diols as the photocurable component include, but are not limited to, ethylene glycol, 1,2-propylene glycol, 1,3-propanediol, 1,4-butanediol, 1,6-hexanediol, diethylene glycol, 2-methyl-1,3 propanediol, 3-methyl-1,5-pentanediol, 2,2-dimethyl-1,3-propanediol, 2,2,4-trimethyl 1,5-pentanediol, and 2-methyl-2-ethyl-1,3-propanediol, and oligomers thereof containing up to four oxyalkylene repeating units.

The aliphatic diol (linear, branched or containing a ring structure) may be ethylene glycol, 1,2-propanediol, 1,3-propanediol, 1,4-butanediol, neopentyl glycol, 2-ethyl-1,3-hexanediol, 1,3-butanediol, 2-butyl-2-ethyl-1,3-propanediol, 2,4-diethyl-1,5-pentanediol and the like and short chain oligomers thereof (containing up to four oxyalkylene repeating units. Typically, the hydroxyl groups in such aliphatic diols are primary or secondary hydroxyl groups, which will react readily with the diisocyanates used to make the inherently reactive urethane acrylate oligomers.

The polyol may selected from ethylene glycol, propylene glycol, 1,3-propanediol, 1,2, 1,3 or 1,4 butanediols, 2-methyl-1,3-propane diol (MPDiol), neopentyl glycol, alkoxylated derivatives of these, polyether diols, polyester diols, or polysiloxane diols and combinations thereof.

The photocurable component may comprise a cyclic ether compound, a cyclic lactone compound, a cyclic acetal compound, a cyclic thioether compounds, a spiro orthoester compounds or vinyl ether compound, for example.

The photocurable component may comprise a cationically polymerizable vinyl ether. Non-limiting examples of cationically polymerizable vinyl ethers include hydroxy-functionalized compounds that contain one or more vinyl groups such as, for example, ethylene glycol vinyl ether, propylene glycol vinyl ether, 1,4-butanediol vinyl ether, 1,3-butanediol vinyl ether, 1,6-hexanediol vinyl ether, 2-methyl-1,3-propane diol vinyl ether, or di(ethylene glycol) vinyl ether, di(propylene glycol) vinyl ether.

The curable compositions of the present disclosure may optionally contain one or more additives instead of or in addition to the above-mentioned components. Such additives include, but are not limited to, antioxidants, ultraviolet absorbers, photostabilizers, foam inhibitors, flow or leveling agents, colorants, pigments, dispersants (wetting agents), slip additives, fillers (other than or in addition to inorganic nanoparticles), thixotropic agents, matting agents, accelerators, adhesion promoters (such as acidic adhesion promoters), thermoplastics and other types of polymers (other than or in addition to the above-described block copolymers), waxes or other various additives, including any of the additives conventionally utilized in the coating, sealant, adhesive, molding or ink arts.

In further examples, the curable compositions may include an impact modifier that imparts impact resistance to a cured composition even greater than that imparted by the multistage polymer particles alone. Examples of such additional impact modifiers include, without limitation, poly(methyl acrylate), poly(propyl acrylate), poly(isopropyl acrylate), poly(butyl acrylate), poly(tert-butyl acrylate), poly(methyl methacrylate), poly(ethyl methacrylate), poly(butyl methacrylate), polyisoprene, polybutadiene, polystyrene, polyalkylstyrene, polyacrylonitrile, poly(alkylacrylate), poly(alkylmethylacrylate), or copolymers thereof. A specific example of an impact modifier for inclusion in the curable composition is methyl methacrylate butadiene styrene (MBS).

Any of the types of impact modifiers known in the polymer art may be used, but the addition of impact modifiers which are block copolymers is particularly advantageous. The curable composition may comprise, for example, one or more thermoplastic acrylic block copolymers. The block copolymer may have a core-shell structure. According to a first embodiment, the matrix is composed of at least one thermoplastic acrylic block copolymer having a general formula $(A)_nB$ in which: n is an integer of greater than or equal to 1 and A is an acrylic or methacrylic homo- or copolymer having a Tg of greater than 50° C., preferably of greater than 80° C. or polystyrene or an acrylic/styrene or methacrylic/styrene copolymer. Tg (glass transition temperature) is measured using a differential scanning calorimeter (DSC), after a second heating pass, according to standard ISO 11357-2. The heating and cooling rate is 20° C./min.

Preferably, A is methyl methacrylate, phenyl methacrylate, benzyl methacrylate or isobornyl methacrylate. Preferably, the block A is PMMA or PMMA modified with acrylic or methacrylic comonomers; B is an acrylic or methacrylic homo- or copolymer having a Tg of less than 20° C., preferably consisting of methyl acrylate, ethyl acrylate, butyl acrylate, ethylhexyl acrylate or butyl methacrylate, more preferably butyl acrylate.

Furthermore, the blocks A and/or B can comprise other acrylic or methacrylic comonomers carrying various functional groups known to a person skilled in the art, for example acid, amide, amine, hydroxyl, epoxy or alkoxy functional groups. The block A can incorporate carboxylic acid functional groups, such as acrylic acid or methacrylic acid, in order to increase the temperature stability thereof.

The thermoplastic acrylic block copolymer may have a structure selected from: ABA, AB, AB and $A_4B$. Preferably, the thermoplastic acrylic block copolymer is chosen from the following triblock copolymers: pMMA-pBuA-pMMA, p(MMAcoMAA)-pBuA-p(MMAcoMAA) and p(MMAcoAA)-pBuA-p(MMAcoAA). In one embodiment, the block copolymer is of MAM type (PMMA-pBuA-PMMA). The block B may represent from 25% to 75% of the total weight of the block copolymer, e.g., preferably from 40% to 65%. The block B may have a weight-average molecular weight of between 10,000 g/mol and 300,000 g/mol, e.g., preferably from 20,000 g/mol to 150,000 g/mol.

Other suitable types of impact modifiers useful in the present invention include non-acrylic block copolymers such as, for example, block copolymers of vinyl aromatic monomers and dienes and hydrogenated derivatives thereof. Examples of such block copolymers include linear and radial block copolymers comprising at least one block which is a polystyrene block and at least one block which is a polydiene block such as polybutadiene or polyisoprene or a hydrogenated polybutadiene or hydrogenated polyisoprene block (e.g., SBS block copolymers, SIS block copolymers).

Block copolymers useful as impact modifiers in the curable compositions of the present invention are available from commercial sources, including, for example, the block copolymer impact modifiers sold under the brand names "Nanostrength" and "Durastrength" by Arkema as well as the non-acrylic styrenic block copolymers sold under the brand name "Kraton" by Kraton Corporation.

While an impact modifier is an optional component of the curable compositions described herein, where present it may comprise, for example, up to 20% by weight of the curable composition (e.g., from 0.5 to 15% by weight).

### Coated Substrates

The multistage polymer particle masterbatch compositions described herein, or the curable compositions including a multistage polymer particle masterbatch composition described herein may be implemented as a coating material for providing a coated substrate.

Accordingly, a coated substrate may include a substrate and a coating prepared by applying the multistage polymer particle masterbatch or a curable composition containing the multistage polymer particle masterbatch on at least a portion of a surface of the substrate, then subsequently curing the curable composition. The curable composition may be applied to the substrate by dip coating, bar coating, electrospinning, layer-by-layer coating, drop coating, spin coating, slot die coating, or doctor blading, for example. The curing may be accomplished, based on the components in the curable composition, by customary curing techniques including heating, exposure to ultraviolet radiation, or combinations thereof.

In some examples, the substrate may be chosen from metals, ceramics, composites, or polymers. In further examples, the substrate may be a metal substrate on which the cured composition is coated. In embodiments, the substrate is a portion of a battery pack or a portion of a battery housing, such as for a lithium-ion battery, and the layer is a protective layer or a dielectric layer. The layer may be applied to a conductive element of a battery, preferably a lithium-ion battery, as a dielectric layer. The cured product coated on such a battery pack, battery housing, or conductive element, serves as a protective layer or a dielectric layer, in which the cured product has good an electric insulating properties as well as good thermal and chemical resistance.

The curable compositions described herein may be used further as components of an acrylic structural adhesive, a thermoset material, an impact-resistant industrial coating, an electronic device. In any of such applications, the curable composition is included in combination with other components or ingredients that are customary to the particular application.

### ASPECTS

Embodiments of this disclosure are further elucidated through the following aspects, which shall not be construed as limiting on the disclosure or the appended claims:

Aspect 1: A method for preparing a multistage polymer particle masterbatch composition, the method comprising the following steps: (a) adding an organic solvent to an aqueous dispersion comprising multistage polymer particles and water, the organic solvent being at least partially miscible in the water; (b) increasing a ratio of the organic solvent to the water in the aqueous dispersion by removing liquids from the aqueous dispersion and subsequently replacing the liquids with additional portions of the organic solvent to obtain an organic-solvent based dispersion comprising the multistage polymer particles, the organic solvent, and residual water; (c) adding at least one (meth)acrylate monomer to the organic-solvent based dispersion; and (d) removing the organic solvent and residual water from the organic-solvent based dispersion to obtain the multistage polymer particle masterbatch composition, wherein: the multistage polymer particles comprise a core polymer, an inner shell polymer surrounding the core polymer, and an outer shell polymer surrounding the inner shell polymer; the core polymer has a glass transition temperature of less than 10 °C; the inner shell polymer has a glass transition temperature of at least 60 °C; and the outer shell polymer has a glass transition temperature of at least 30 °C.

Aspect 2: The method of Aspect 1, wherein the multistage polymer particle masterbatch composition comprises, based on the total weight of the multistage polymer particle masterbatch composition: from 60% to 99% by weight (meth)acrylate monomer; and from 1% to 40% by weight multistage polymer particles dispersed in the (meth)acrylate monomer.

Aspect 3: The method of Aspect 1 or 2, wherein: the core polymer comprises residues of monomers chosen from methyl acrylate, propyl acrylate, isopropyl acrylate, butyl acrylate, tert-butyl acrylate, methyl methacrylate, ethyl methacrylate, butyl methacrylate, isoprene, butadiene, combinations of the foregoing, or combinations of isoprene and butadiene with up to 98 wt% of a vinyl monomer residue chosen from styrene, alkylstyrene, acrylonitrile, or alkyl (meth)acrylate; the inner shell polymer comprises residues of monomers chosen from methyl (meth)acrylate, ethyl (meth)acrylate, butyl (meth)acrylate, or combinations thereof; and the outer shell polymer comprises residues of monomers chosen from alkyl (meth)acrylates, cyclohexyl (meth)acrylate, 4-tertbutyl cyclohexyl (meth)acrylate, bornyl (meth)acrylate, norbornyl (meth)acrylate, isobornyl acrylate, isobornyl (metha)crylate, fenchyl (meth)acrylate, dicyclopentanyl (meth)acrylate, dicyclopentenyl (meth)acrylate, adamantyl acrylate, adamantyl (meth)acrylate, dimethyl adamantyl (meth)acrylate, cyclodecyl acrylate, cyclodecyl (meth)acrylate, or combinations thereof.

Aspect 4: The method of Aspect 1 or 2, wherein: the core polymer comprises a homopolymer or copolymer of butadiene; the inner shell polymer comprises a copolymer of methyl methacrylate and divinyl benzene; and the outer shell polymer comprises methyl methacrylate.

Aspect 5: The method of any one of Aspects 1 to 4, wherein the (meth)acrylate monomer is a hydrophobic (meth)acrylate monomer having a Hansen solubility parameter polarity component $\delta_P$ less than 10.5 MPa$^{1/2}$ and the multistage polymer particle masterbatch composition comprises, based on the total weight of the multistage polymer particle masterbatch composition: from 80% to 99% by weight hydrophobic (meth)acrylate monomer; and from 1% to 20% by weight multistage polymer particles dispersed in the hydrophobic (meth)acrylate monomer.

Aspect 6: The method of any one of Aspects 1 to 5, wherein the outer shell polymer comprises monomer residues of at least one monomer having a Hansen solubility parameter polarity component $\delta_P$ less than 10.5 MPa$^{1/2}$.

Aspect 7: The method of one of Aspects 1 to 6, wherein: the core polymer comprises residues of monomers chosen from methyl acrylate, propyl acrylate, isopropyl acrylate, butyl acrylate, tert-butyl acrylate, methyl methacrylate, ethyl methacrylate, butyl methacrylate, isoprene, butadiene, combinations of the foregoing, or combinations of isoprene and butadiene and up to 98 wt% of vinyl monomer residues chosen from styrene, alkylstyrene, acrylonitrile, or alkyl (meth)acrylate; the inner shell polymer residues of monomers chosen from methyl (meth)acrylate, ethyl (meth)acrylate, butyl (meth)acrylate, or combinations thereof; and the outer shell polymer residues of monomers chosen from cyclohexyl (meth)acrylate, 4-tertbutyl cyclohexyl (meth)acrylate, bornyl (meth)acrylate, norbornyl (meth)acrylate, isobornyl acrylate, isobornyl (metha)crylate, fenchyl (meth)acrylate, dicyclopentanyl (meth)acrylate, dicyclopentenyl (meth)acrylate, adamantyl acrylate, adamantyl (meth)acrylate, dimethyl adamantyl (meth)acrylate, cyclodecyl acrylate, cyclodecyl (meth)acrylate, or combinations thereof.

Aspect 8: The method of any one of Aspects 1 to 7, wherein: the core polymer comprises a butadiene homopolymer or a butadiene copolymer; the inner shell polymer comprises a copolymer of methyl methacrylate and divinyl benzene; and the outer shell polymer comprises isobornyl methacrylate.

Aspect 9: The method of any one of Aspects 1 to 8, wherein the outer shell polymer has a weight-average molecular weight from 10,000 g/mol to 500,000 g/mol.

Aspect 10: The method of any one of Aspects 1 to 9, wherein the (meth)acrylate monomer comprises a hydrophobic (meth)acrylate monomer having a Hansen solubility parameter polarity component $\delta_P$ less than 10.5 MPa$^{1/2}$.

Aspect 11: The method of Aspect 10, wherein the hydrophobic (meth)acrylate monomer is chosen from isobornyl (meth)acrylate, 3,3,5-trimethylcyclohexyl (meth)acrylate, tert-butyl cyclohexyl (meth)acrylate, tricyclodecanedimethanol di(meth)acrylate, cyclohexane dimethanol di(meth)acrylate, isodecyl (meth)acrylate, isooctyl (meth)acrylate, stearyl (meth)acrylate, 1,12-dodecanediol di(meth)acrylate, lauryl (meth)acrylate, tridecyl (meth)acrylate, octyl/decyl (meth)acrylate, caprolactone (meth)acrylate, neopentyl glycol di(meth)acrylate, or combinations thereof.

Aspect 12: The method of Aspect 10, wherein the hydrophobic (meth)acrylate monomer comprises a tricyclodecanedimethanol diacrylate.

Aspect 13: The method of any one of Aspects 1 to 12, wherein: the outer shell polymer comprises monomer residues of at least one monomer having a Hansen solubility parameter polarity component $\delta_P$ less than 10.5 MPa$^{1/2}$; and the (meth)acrylate monomer is a hydrophobic (meth)acrylate monomer having a Hansen solubility parameter polarity component $\delta_P$ less than 10.5 MPa$^{1/2}$.

Aspect 14: The method of any one of Aspects 1 to 13, wherein: the core polymer comprises a butadiene homopolymer or a butadiene copolymer; the inner shell polymer comprises a copolymer of methyl methacrylate and divinyl benzene; the outer shell polymer comprises isobornyl methacrylate; and the hydrophobic (meth)acrylate monomer comprises a tricyclodecanedimethanol diacrylate.

Aspect 15: The method of any one of Aspects 1 to 14, wherein the multistage polymer particle masterbatch composition has a viscosity from 100 cP to 200,000 cP.

Aspect 16: The method of any one of Aspects 1 to 15, wherein the multistage polymer particle masterbatch composition has a viscosity from 1000 cP to 15,000 cP.

Aspect 17: The method of any one of Aspects 1 to 16, wherein the multistage polymer particles have a weight average particle size from 15 nm to 900 nm.

Aspect 18: The method of any one of Aspects 1 to 17, further comprising adding an acid, to the aqueous dispersion either before adding the organic solvent in step (a) or after adding the organic solvent in step (a) but before removing liquids in step (b), the acid being chosen from organic acids or inorganic acids.

Aspect 19. The method of Aspect 18, wherein the acid is chosen from carboxylic acids, alkanoic acids, organic boric acids, organic phosphonic acids, organic phosphoric acids, organic sulfonic acids, or combinations thereof.

Aspect 20: The method of Aspect 18 or 19, wherein the acid is chosen from lactic acid, acetic acid, formic acid, citric acid, oxalic acid, uric acid, malic acid, tartaric acid, (meth)acrylic acid, or combinations thereof.

Aspect 21: The method of any one of Aspects 18 to 20, wherein the acid is a carboxylic acid.

Aspect 22: The method of any one of Aspects 18 to 21, wherein the acid comprises acetic acid.

Aspect 23: The method of any one of Aspects 18 to 22, wherein the acid is added to the aqueous dispersion as an aqueous solution comprising from 0.001% to 10% by weight of the acid, based on the total weight of the aqueous dispersion.

Aspect 24: The method of any one of Aspects 18 to 23, wherein the acid is added to the aqueous dispersion as an aqueous solution comprising from 0.05% to 5% by weight of the acid, based on the total weight of the aqueous solution.

Aspect 25: The method of any one of Aspects 18 to 24, wherein the acid is added to the aqueous dispersion as an aqueous solution comprising from 0.5% to 3% by weight of the acid, based on the total weight of the aqueous solution.

Aspect 26: The method of any one of Aspects 18 to 25, wherein adding the acid comprises combining from 30 parts to 70 parts by weight aqueous dispersion and from 70 parts to 30 parts by weight aqueous solution to obtain 100 parts by weight acid-treated dispersion, and wherein the aqueous solution comprises from 0.001% to 10% by weight of the acid, based on the total weight of the aqueous solution.

Aspect 27: A multistage polymer particle masterbatch composition prepared according to the method of any one of Aspects 1 to 26.

Aspect 28: A curable composition comprising: a multistage polymer particle masterbatch composition according to Aspect 27; and at least one initiator.

Aspect 29: The curable composition of Aspect 28, wherein the initiator is a thermal initiator or a photoinitiator.

Aspect 30: The curable composition of Aspect 28 or 29, further comprising a photocurable component, in particular a photocurable component comprising at least one photocurable monomer or oligomer chosen from (meth)acrylate monomers; (meth)acrylate oligomers such as epoxy (meth)acrylates, polyester (meth)acrylates, polyether (meth)acrylates, urethane (meth)acrylates, or (meth)acrylated poly(meth)acrylates; ethylenically unsaturated compounds other than a (meth)acrylate-functionalized monomer or oligomer; cationically polymerizable compounds such as epoxides, oxetanes, alcohols, vinyl ethers or vinyl esters; or combinations thereof.

Aspect 31: The curable composition of any one of Aspects 28 to 30, wherein the photocurable component comprises at least one (meth)acrylate monomer and at least one (meth)acrylate oligomer.

Aspect 32: The curable composition of any one of Aspects 28 to 31, further comprising an impact modifier in addition to the multistage polymer particles.

Aspect 33: The curable composition of Aspect 32, wherein the impact modifier is chosen from thermoplastic acrylic block copolymers or non-acrylic styrenic block copolymers.

Aspect 34: The curable composition of Aspect 32 or 33, wherein the additional impact modifier comprises a methyl methacrylate butadiene styrene copolymer.

Aspect 35: A coated substrate, comprising: a substrate; and a coating prepared by applying a layer of a multistage polymer particle masterbatch composition according to Aspect 27 or a curable composition according to any one of Aspects 28 to 34 on at least a portion of a surface of the substrate and curing the layer.

Aspect 36: The coated substrate of Aspect 35, wherein the curable composition is applied by dip coating, bar coating, electrospinning, layer-by-layer coating, drop coating, spin coating, slot die coating, or doctor blading.

Aspect 37: The coated substrate of Aspect 35 or 36, wherein the substrate is a metal substrate.

Aspect 38: The coated substrate of any one of Aspects 35 to 37, wherein the substrate is chosen from metals, ceramics, composites, or polymers, and the substrate is a portion of a battery pack or a portion of a battery housing and the layer is a protective layer or a dielectric layer.

Aspect 39: The coated substrate of any one of Aspects 35 to 37, wherein the layer is applied to a conductive element of a battery, preferably a lithium-ion battery, as a dielectric layer.

Aspect 40: Use of the multistage polymer particle masterbatch composition according to Aspect 27 or the curable composition according to any one of Aspects 28 to 34 as a component of an acrylic structural adhesive, a thermoset material, an impact-resistant industrial coating, an electronic device.

## EXAMPLES

The following Examples are offered by way of illustration and are presented in a manner such that one skilled in the art should recognize are not meant to be limiting to the present disclosure as a whole or to the appended claims.

### Testing Procedures

Example compositions and formulations of this disclosure are characterized according to the following procedures.

#### Viscosity

Viscosity is measured using a Brookfield DV-III+ viscometer with SC-27 spindle at room temperature or 60 °C (depending on viscosity). Each sample is measured at a certain number of revolutions per minute (rpm) needed to achieve 50% torque range. Viscosity is measured in centipoise (cP) after temperature and sample stabilization are achieved (typically after 10 minutes).

### FT-IR Spectroscopy (ASTM E1421)

FT-IR is measured using a ThermoFisher Nicolet IS50-FT-IR Spectrometer with an attenuated total reflectance (ATR) accessory.

### Dynamic Light Scattering (DLS)

DLS particle size analysis is completed on a Zetasizer Nano Series Nano S. A glass or quartz curvette is used with monomer diluent. One drop of material is diluted with 4 mL of monomer and is mixed using a vortex mixer prior to measurement.

### Indirect Impact Resistance (ASTM D2794)

Indirect impact resistance is measured using a TQC SP1880 Impact Tester. Fifty micron ($\mu$m) thick coatings are cured on aluminum panels using 395 nm LED light (Phoseon LED lamp at 30 flashes per minute (fpm), intensity of 10, two passes). The aluminum panels are placed, with coating side down, under the beveled die in the impact tester. A one-kilogram weight is dropped from a predetermined height onto the beveled die. Panels are turned over, and the coatings are inspected for visible crazing and cracking. A successful test displays no significant visible defects after impact.

### Flexural Modulus (ASTM D790)

Flexural modulus is measured using a three-point bend test on an Instron Dual Column Table Frame Model No. 5966. Samples are cured in silicone molds of a predetermined dimension (typically 80 mm $\times$ 10 mm $\times$ 4 mm) under a 395-nm LED light using a Phoseon LED lamp at 30 fpm, intensity of 10, three passes each side. The cured parts are placed in a constant temperature room (23°C $\pm$ 2°C, 50% $\pm$10% RH, in line with ASTM D618) 24 hours prior to testing. Data are reported as an average of at least three samples.

### Hardness (ASTM D2240)

Hardness testing is conducted on notched Izod impact bars (post testing) using a Shore D durometer. Hardness is reported as number D.

### Shrinkage

Shrinkage is reported as a percentage of the specific gravity of the cured material versus the specific gravity of the uncured material. The density of uncured material is measured using a BYK US midget density cup (8.32 mL) at room temperature. The density of the cured material is measured in water using an Ohaus PX323 analytical balance with a Sartorius YDK03 Density Determination Kit.

### Dielectric Constant and Loss

Film thickness is measured using a Heidenhain Metro length gauge unit accurate within $\pm$0.2 $\mu$m with a measuring range of 0 to 12 mm, and compliant with ASTM D374-99 for measuring thickness of the specimen. Three locations in a 1.0-cm$^2$ area are chosen for film thicknesses measurement prior to screen printing the conductive ink, and their average is used for the dielectric constant calculations.

For dielectric constant and loss measurements, DuPont PE828 is deposited via screenprinting on five samples in a 50-mm diameter circular mask. An Agilent E4980AL precision LCR Meter is used to measure dielectric constant and dielectric loss as a function of frequency. The connection from the LCR meter is made with a Keysight 16451B sample holder at room temperature. A 1-V bias at frequency is applied to measure the capacitance value.

### Surface and Volume Resistivity

As in the dielectric constant and loss section, thickness is first measured on cured, non-electroded samples using a Heidenhain Metro length gauge. Three locations in a 1.0-cm$^2$ area were chosen for film thicknesses measurement and their average is used for the volume resistivity input. The Keithley 6517B Electrometer/High Resistance Meter with Interlocked Keithley 8009 test enclosure. An alternate-polarity measurement at 100 V is used with a 5-second measurement time and a 1-second discharge time on each sample. The surface and volume resistivity are measured on one side, and then the sample is flipped to determine an average.

**Materials and Compositions**

TABLE 1 provides chemical descriptions for various materials named by tradename in these Examples.

TABLE 1: Chemical Descriptions of Materials Used in These Examples

| Material | Chemical Description | Supplier |
|---|---|---|
| MSP1 | a multistage polymer particle having a rubber core, a methacrylate-based inner shell, and a non-hydrophobic polymer outer shell having a Hansen solubility parameter polarity component ($\delta_P$) greater than 10.5 MPa$^{1/2}$ | - |
| MSP2 | a multistage polymer particle having a rubber core, a methacrylate-based inner shell, and an outer shell of a hydrophobic polymer having a Hansen solubility parameter polarity component ($\delta_P$) less than 10.5 MPa$^{1/2}$ | - |
| CN991 | polyester-based urethane diacrylate oligomer | Sartomer |
| SR217 | cycloaliphatic acrylate monomer | Sartomer |
| SR262 | 1,12 dodecanediol dimethacrylate monomer | Sartomer |
| SR351 | trimethylolpropane triacrylate monomer | Sartomer |
| SR420 | 3,3,5-trimethyl cyclohexyl acrylate monomer | Sartomer |
| SR423A | isobornyl methacrylate monomer | Sartomer |
| SR506A | isobornyl acrylate monomer | Sartomer |
| SR533 | triallyl isocyanurate monomer | Sartomer |
| SR833S | tricyclodecane dimethanol diacrylate monomer | Sartomer |
| SR9051 | trifunctional acid ester | Sartomer |
| Speedcure 73 | 2-hydroxy-2-m ethyl-1-phenylpropanone | Sartomer |
| Speedcure BPO | phenyl bis(2,4,6-trimethylbenzoyl)-phosphine oxide | Sartomer |
| TiO$_2$ | Titanium dioxide | Kronos |

**Example 1: General Procedure for Preparation of Multistage Polymer Particle Masterbatch by Dry Process**

The following general procedures apply to preparation of multistage polymer particle masterbatches by a dry process. Generally, a latex containing multistage polymer particle MSP1 or MSP2 (32 wt% solid content) is spray-dried to coagulate the particles as aggregates having sizes from about 80 $\mu$m to about 250 $\mu$m. The dried aggregates are then dispersed and mixed into a monomer to obtain a multistage polymer particle masterbatch MSP1-DP or MSP2-DP.

By a first procedure, to a 400-gram polypropylene cup is added a (meth)acrylate monomer (240 g). Next, 60 grams of MSP1 or MSP2 multistage polymer particle is added, and the resulting masterbatch is mixed using a Flacktek® DAC 400.2 VAC high-speed mixer at 2000 RPM for 2 minutes under vacuum. After the 2 minutes, the masterbatch is checked for homogeneity and dispersion quality using a Hegman grind gauge. The masterbatch may be re-mixed at 2000 rpm for an additional 2 minutes to 5 minutes until homogenous.

By a second procedure as an alternative to the first procedure, to a 500-mL tri-pour plastic beaker is added 240 g of (meth)acrylate monomer. Next, 60 grams of MSP1 or MSP2 multistage polymer particle is added slowly over time under high shear mixing (150 rpm, 30 minutes). After all the multistage polymer particle has been added, the masterbatch is mixed for an additional 1 hour to 3 hours, at up to 500 rpm, until homogenous.

Optionally, if homogeneity is not achieved through the first procedure or the second procedure, the masterbatch may be placed on a three-roll mill and passed as many times as needed until a desired primary particle size is reached via Hegman grind gauge.

**Example 2: General Procedure for Preparation of Multistage Polymer Particle Masterbatch by Solvent-Exchange**

The following general procedure applies to preparation of multistage polymer particle masterbatches by a solvent-exchange process.

To a three-neck, 1-L washing flask equipped with agitator, thermocouple, temperature controller, addition funnel, and aqueous waste collecting beaker, 100 grams of a latex including multistage polymer particle MSP1 or MSP2 (32 wt% solid content) and 100 grams methylethyl ketone (MEK) are added. The contents of the flask are mixed at 300 rpm for 30 minutes. Then, 160 grams water are added through an addition funnel over 3 minutes with agitation. The agitation when is stopped when all water is added in, to obtain floating agglomerates in liquid. The agglomerates are allowed to settle for about 30 minutes. The liquid is drained into a beaker, and the agglomerates are retained in the washing flask.

Then, 80 grams of MEK are added into the washing flask with agitation at 300 rpm for about 30 minutes to re-disperse the agglomerates into the MEK. To the re-dispersed agglomerates, 128 grams of a monomer is added, and agitation is continued at 300 rpm for another 30 minutes. The MEK and any residual water are stripped off at 50 °C/20 mmHg with agitation at 200 rpm to obtain a multistage polymer particle masterbatch, MSP1-SE or MSP2-SE, of the multistage polymer particle MSP1 or MSP2, respectively, in the monomer. The procedure yields about 160 grams of the multistage polymer particle masterbatch having a 20 wt.% solids content.

**Example 3: General Procedure for Preparation of Multistage Polymer Particle Masterbatch by Solvent-Exchange with Acid Wash**

The following general procedure applies to preparation of multistage polymer particle masterbatches by a solvent-exchange process, with an acid wash to remove residual surfactants and ionic contaminants present in the multistage polymer particles.

To a three-neck, 1-L washing flask equipped with agitator, thermocouple, temperature controller, addition funnel, and aqueous waste collecting beaker, 100 grams of a latex including multistage polymer particle MSP1 or MSP2 (32 wt% solid content) and 100 grams methylethyl ketone (MEK) are added. The contents of the flask are mixed at 300 rpm for 30 minutes. To the flask, 160 grams of an organic or inorganic acid solution such as 1% or 2% acetic acid is added through an addition funnel over 3 minutes with agitation. The agitation is continued until all acetic acid solution has been added, to obtain floating agglomerates in liquid. The mixture is allowed to settle for about 30 minutes. The liquid is drained into a beaker, and the agglomerates are retained in the washing flask. Then 160 grams of water is added to the flask with agitation for 2 minutes. The agitation is continued until all water is added. The mixture is allowed to settle for half an hour. The liquid is dropped to a beaker, and the agglomerates are retained in the washing flask.

Then, 80 grams of MEK are added into the washing flask with agitation at 300 rpm for about 30 minutes to re-disperse the agglomerates into the MEK. To the re-dispersed agglomerates, 128 grams of a monomer is added, and agitation is continued at 300 rpm for another 30 minutes. The MEK and any residual water are stripped off at 50 °C/20 mmHg with agitation at 200 rpm to obtain a multistage polymer particle masterbatch, MSP1-SE-A or MSP2-SE-A, of the multistage polymer particle MSP1 or MSP2, respectively, in the monomer. The procedure yields about 160 grams of the multistage polymer particle masterbatch having a 20 wt.% solids content.

**Example 4: Preparation of Curable Compositions**

The following general procedure applies to preparation of curable compositions described in the Examples of this disclosure.

To a Flacktek® polypropylene high-speed mixer cup containing 2% Speedcure TPO-L photoinitiator, 40 grams of a multistage polymer particle masterbatch prepared by the general procedure according to one of Examples 1-3 is added. For control samples noted in the following Examples of this disclosure, 40 grams of a monomer not including multistage polymer particles was added to the photoinitiator in the place of the multistage polymer particle masterbatch. The combination of masterbatch and photoinitiator is mixed at 2000 rpm for 2 minutes until homogenous, using a Flacktek® DAC 400.2 VAC high-speed mixer.

**Example 5: Characterizations of Multistage Polymer Particle Masterbatches**

**Prepared by Dry Process**

Particle Dispersion Quality

The dispersion qualities of masterbatches MSP1-DP prepared according to Example 1 and of masterbatches MSP2-DP prepared according to Example 2 were evaluated, in which the some of the monomers were hydrophobic monomers having polarity component of less than 10 MPa$^{1/2}$. Particularly, seven masterbatches MSP1-DP and seven corresponding masterbatches MSP2-DP were prepared, in which the monomers added to the multistage polymer particles were the monomers listed in TABLE 2:

TABLE 2: Monomers in MSP1 masterbatches and MSP2 masterbatches, with polarity component ($\delta_P$) of Hansen solubility parameter of the monomers

| Acrylic Monomer | Chemical Name | Hansen Solubility Polarity Component $\delta_P$ (MPa$^{1/2}$) |
|---|---|---|
| SR217 | Cycloaliphatic Acrylate | 7.70 |
| SR420 | 3,3,5-Trimethyl cyclohexyl Acrylate | 7.71 |
| SR423A | Isobornyl Methacrylate | 7.75 |
| SR262 | 1,12 Dodecanediol Dimethacrylate | 8.44 |
| SR833S | Tricyclodecane Dimethanol Diacrylate | 10.31 |
| SR351 | Trimethylolpropane Triacrylate | 11.18 |
| SR533 | Triallyl Isocyanurate | 13.44 |

Each masterbatch was assessed qualitatively for appearance and viscosity, as provided in TABLE 3.

TABLE 3: Qualitative appearance and viscosity of masterbatches containing 20 wt.% multistage polymer particles dispersed in 80 wt.% hydrophobic monomer by the dry process according to Example 1

| Sample # | Masterbatch Type | Monomer | Monomer Polarity Component $\delta_p$ | Appearance | Viscosity |
|---|---|---|---|---|---|
| 1A | MSP1-DP | SR217 | 7.70 | Yellow powder gel | N/A |
| 1B | MSP2-DP | | | Yellow liquid | Very viscous |
| 2A | MSP1-DP | SR420 | 7.71 | White powder gel | N/A |
| 2B | MSP2-DP | | | White liquid | Thin |
| 3A | MSP1-DP | SR423A | 7.75 | White powder | N/A |
| 3B | MSP2-DP | | | White soft gel | N/A |
| 4A | MSP1-DP | SR262 | 8.44 | White powder gel | N/A |
| 4B | MSP2-DP | | | White soft gel | N/A |
| 5A | MSP1-DP | SR833S | 10.31 | White soft gel | N/A |
| 5B | MSP2-DP | | | Clear liquid | Viscous |
| 6A | MSP1-DP | SR351 | 11.18 | White liquid | Very viscous |
| 6B | MSP2-DP | | | White liquid | Thin |
| 7A | MSP1-DP | SR533 | 13.44 | Yellow soft gel | N/A |
| 7B | MSP2-DP | | | Clear liquid | Viscous |

As is evident from TABLE 3, the MSP1-DP masterbatches 1A, 2A, 3A, and 4A were powdered, hard gels. Without intent to be bound by theory, it is believed that the observed characteristics of these masterbatch may have resulted from instability of the multistage polymer particles in the hydrophobic monomers. On the other hand, the MSP2-DP masterbatches in the same hydrophobic monomers, each of which included multistage polymer particles MSP2 with a more hydrophobic outer core than that of MSP1, were either flowable or very viscous soft gels exhibiting shear thinning. Again, without intent to be bound by theory, it is believed that the improved mixing characteristic may be attributed to the hydrophobic outer shell of MSP2 that allows increases compatibility and exhibits less swelling than MSP1 in the same monomer.

As a further test of dispersion quality for an exemplary masterbatch including hydrophobic multistage polymer particles, a curable composition including the sample 5B of TABLE 3 (MSP2-DP masterbatch with SR833S monomer) and photoinitiator was prepared according to Example 4 of this disclosure. After mixing the masterbatch and the photoinitiator, the resulting curable composition was tested for dispersion quality using a Hegman grind gauge (0 to 25 μm). No visible particles were observed on the gauge, consistent with excellent dispersion quality of the MSP2 multistage polymer particles in the hydrophobic monomer.

Shrinkage

UV curable systems have a tendency to undergo volumetric shrinkage upon exposure to UV/EB light. Shrinkage can cause internal stress to build up within the material, which can lead to delamination or loss of bonding. In general, the greater the amount of highly functional materials within the coating, the larger the amount of shrinkage. It is desirable to include highly functional materials in a thermoset system, because they may offer faster cure with greater chemical resistance. Shrinkage may be decreased by adding lower functionality materials, which in turn lowers crosslinking density and decreases internal stress. Similarly, thermoset systems that contain materials with greater flexibility, which in turn decreases internal stress and increases adhesion characteristics.

Shrinkage occurs during the polymerization of acrylate functionalized materials when forming thermosets under photo- or peroxide-curing conditions. Shrinkage is due to the replacement of long-distance, intermolecular Van der Waals forces by strong, shorter covalent bonds between the carbon atoms of different monomer/oligomer units. The outcome is that there is an observed change in density ($\rho$) of the material. The difference in densities of the cured and uncured material is used to calculate shrinkage. A balance with density kit (solid) and density cup (liquid) provides a cost-effective and versatile method for measuring the shrinkage of a material.

$$\text{Shrinkage } (\%) = 100 \times \frac{\rho_{polymer} - \rho_{monomer}}{\rho_{polymer}}$$

Shrinkage is due to double bond polymerization. The maximum shrinkage of a material (100% double bond conversion) can be easily estimated from the functionality, density and molecular weight of a monomer. Experimental shrinkage values can be obtained by comparing the density of uncured monomers to the density of a cured polymer.

Accordingly, a curable composition including the sample 5B of TABLE 3 (MSP2-DP masterbatch with SR833S monomer) and photoinitiator was prepared according to Example 4. As an experimental control, a curable composition including only SR833S, with no multistage polymers particles was prepared according to Example 4. Shrinkage was evaluated both samples. The shrinkage data are provided in TABLE 4.

TABLE 4: Comparative shrinkage characteristics of curable composition without multistage polymer particles and curable composition prepared from MSP2 masterbatch

| Property | Composition | |
|---|---|---|
| | SR833S only (comparative) | MSP2-DP masterbatch (80% SR833 S / 20% MSP2) |
| Solid Specific Gravity (g/cm$^3$) | 1.185 | 1.144 |
| Liquid Density (g/cm$^3$) | 1.108 | 1.077 |
| Shrinkage | 6.50% | 5.86% |

The shrinkage of the control sample without MSP2 was greater (6.50%) than that of the masterbatch including the MSP2 (5.86%). Without intent to be bound by theory, it is believed that the observation is consistent with replacing a portion of crosslinker in the control curable composition with a rubber filler particle in the MSP2-DP masterbatch composition. For multifunctional acrylates, experimental shrinkage is far below maximum shrinkage, owing to vitrification phenomena and limitation of double bond conversion. The degree of polymerization may be used to adjust calculated shrinkage values by taking into account conversion levels. Shrinkage is relates in part to the adhesive properties of a material, where lower values of shrinkage relate to greater adherence of the material.

**Example 6: Mechanical Properties of Cured Compositions**

To assess mechanical properties of cured formulations containing a multistage polymer particle masterbatch composition, a curable composition including the sample 5B of TABLE 3 (MSP2-DP masterbatch with SR833S monomer) and photoinitiator was prepared according to Example 4. As an experimental control, a curable composition including only SR833S, with no multistage polymers particles was prepared according to Example 4. Both formulations were cured.

Flexural modulus is related to the amount of energy required to bend a material. The higher the modulus, the more energy is required to bend it. Flexural modulus was determined by ASTM D790. Specifically, flexural modulus was measured using a three-point bend test on an Instron. Samples were cured in silicone molds of specific dimension (80 mm $\times$ 10 mm $\times$ 4 mm) under 395 nm LED light using a Phoseon LED lamp at 30 fpm, intensity of 10, three passes each side. The cured parts were placed in a constant temperature room (consistent with ASTM D618) for at least 24 hours prior to testing. Data is reported in TABLE 5 as an average of at least three samples.

TABLE 5: Flexural modulus of cured composition without multistage polymer particles and curable composition prepared from MSP2 masterbatch

| Property | Resin of Cured Composition | |
| --- | --- | --- |
| | SR833S only (comparative) | MSP2-DP masterbatch (80% SR833 S / 20% MSP2) |
| Flexural Strength (MPa) | 45.2 | 52.4 |
| Strain at Break | 1.48% | 2.68% |
| Strain at Maximum Flexural Stress | 1.37% | 2.51% |
| Energy at Break (J) | 0.10 | 0.21 |
| Flexural Modulus (MPa) | 2880 | 1970 |
| Hardness (Shore D) | 89.3 | 85.3 |

The control sample with no multistage polymer particles had a flexural modulus of 2880 MPa, while the sample toughened with MSP2-DP had a flexural modulus of 1970 MPa. Flexural modulus decreases when adding rubber toughener at high loading to a thermoset acrylic part. Strain at break increased over 50%, from 1.48% for the control sample to 2.68% for the sample with MSP2-DP, indicating more flexibility in the part without sacrificing flexural strength or hardness. Hardness of a material is defined as a measure of the resistance to localized plastic deformation. Hardness was measured using a Shore D durometer. Hardness of the control sample was about 89 D, while hardness for the sample with MSP2-DP was generally maintained, at about 85 D. The toughness of the MSP2-DP sample was more than double that of the control sample.

Indirect Impact Resistance

Indirect impact resistance was assessed for the cured formulations applied as coating materials, the SR833S-only control and the MSP2-DP masterbatch with SR833S. The indirect impact resistance (ASTM D2794) measures the ability of a coating to stand up to an impact force and deformation. The formulations were drawn down on aluminum panels (3 MIL) and cured using Phoseon LED 395 nm, 30 fpm, one pass. The samples were left overnight, and indirect impact resistance was measured the next day. A 1-kilogram weight was dropped from a certain height onto a beveled dye that resting on the back side of the aluminum panel. Five inch-pounds of force (in·lbF) was applied for impact. Panels were inspected for visible crazing and cracking.

After testing, cracks were observed throughout the three impacts on the control samples. All samples containing MSP2 multistage polymer particles showed no visible cracks, indicating that the sample was able to withstand the impact.

Dielectric Constant and Dielectric Loss

Electronic properties were assessed for the cured formulations applied as coating materials, the SR833S-only control and the MSP2-DP masterbatch with SR833S. Flexibility, coefficient of thermal expansion, and shrinkage are important properties of electronic materials such as underfills and encapsulants. Such formulations should maintain low dielectric constant and dielectric loss performance with good overall breakdown strength. When polymeric particles are added and not properly dispersed, the particles can be undesirable sources of electric-field inhomogeneity. the field inhomogeneity can cause dielectric constant and loss to increase, which is detrimental to electronic performance. It is advantageous if an electronic material can have increased flexibility and toughness without forfeiting electrical performance.

For dielectric constant and loss measurements, DuPont PE828 was deposited via screenprinting on five samples in a 50 mm diameter circular mask. An Agilent E4980AL precision LCR Meter was used to measure dielectric constant and dielectric loss as a function of frequency. A 1-V bias at frequency was applied to measure a capacitance value. The dielectric constant (Dk) and dielectric loss (Df) for the SR833S-only control and the MSP2-DP masterbatch with SR833S are provided in TABLE 6.

TABLE 6: Dielectric properties of curable composition without multistage polymer particles and of curable composition prepared from MSP2 masterbatch

| Property | Resin of Cured Composition | |
|---|---|---|
| | SR833S only (comparative) | MSP2-DP masterbatch (80% SR833 S / 20% MSP2) |
| Dk (10 GHz average) | 2.7705225 | 2.69415 |
| Df (10 GHz average) | 0.0139475 | 0.013540 |

The dielectric constant was slightly less for the composition including MSP2 (2.69) than for the control composition without MSP2 (2.77). The dielectric losses were about 0.013 for both. This indicates that the presence of polymeric particles in the MSP2 composition did not increase dielectric constant and loss due and is consistent with uniformity of the dispersion and absence of agglomerated particles therein

**Example 7: Characterizations of Multistage Polymer Particle Masterbatches Prepared by Solvent Exchange**

The characterizations provided in the foregoing Example 6 demonstrate that by adding hydrophobic multistage polymer particle toughener to an acrylic resin system at high loading, desirable shrinkage, impact, flexural and electronic properties can be achieved. However, the compositions of Example 6 all were prepared by the dry powder process. As previously discussed in this disclosure, the dry powder process is limited in applicability to only manufacturing operations equipped to handle powders and disperse them in liquid resins.

Accordingly, two masterbatch compositions were prepared. An MSP2-DP masterbatch was prepared according to the solvent exchange process of Example 2 with SR833S as the resin. An MSP2-DP masterbatch was prepared according to the dry powder process of Example 1 as a basis for comparison. Comparison of viscosities of MSP2-DP and MSP2-SE masterbatches is presented in TABLE 7.

TABLE 7: Comparison of viscosities of curable compositions prepared from MSP2-DP and MSP2-SE masterbatches

| Property | MSP2-DP | MSP2-SE |
|---|---|---|
| Viscosity @ 25 °C (Rheometer, 50% torque) | 3400 cP | 2275 cP |

Qualitatively, it was observed that the dispersion quality of the MSP2-SE masterbatch was consistent with the dispersion quality of the MSP2-DP masterbatch. This is important because, during solvent exchange, the particles are moving from water into solvent and then into hydrophobic monomer, which potentially could result in agglomeration. Measurements performed with a Hegman gauge demonstrated that no particle agglomeration was apparent during the process.

The viscosity of the MSP2-SE masterbatch (2,275 cP) was lower than that of the MSP2-DP masterbatch (3,400 cP). Without intent to be bound by theory, it is believed that this result may be attributed to the washing away of different surfactants and other modifiers from the surface of the multistage polymer particles that were artefacts of the method by which the multistage polymer particles were prepared. Such contaminants are believed to cause particles to move closer to each other, thereby decreasing viscosity of the masterbatch. Measurements by Fourier Transform Infrared (FTIR) spectroscopy showed that the solvent exchange masterbatch and powder masterbatch had very similar traces, indicating that the particles are well dispersed in the hydrophobic monomer. No unidentified stretches were apparent in the FTIR spectra.

Dynamic Light Scattering (DLS) was used to measure the respective sizes of the MSP2 particles in the MSP2-SE masterbatch and the MSP2-DP masterbatch. The MSP2 particle size of the MSP2-SE masterbatch was slightly larger (230.7 nm) than that of the MSP2-DP masterbatch (195.7 nm). Standard deviations of both were both between 32 nm and 43 nm. The larger particle size for the MSP2-SE masterbatch is believed to be attributable to a slight swelling of the particle from solvent used in the exchange. The primary particle size of the MSP2 prior to mixing with monomer is about 200 nm.

Mechanical Properties

To assess mechanical properties of the cured compositions containing the solvent-exchange masterbatch, three curable compositions were prepared according to the procedure of Example 4. The control sample was a combination of 98% by weight SR833 monomer and 2% by weight photoinitiator. A dry-powder sample prepared according to Example 1 was a combination of 98% by weight MSP2-DP and 2% by weight photoinitiator. A solvent-exchange sample MSP2-SE prepared according to Example 2 was a combination of 98% by weight MSP2-SE and 2% by weight photoinitiator.

Flexural modulus was measured on the samples by the method previously described in this disclosure. The data in TABLE 8 is reported as an average of at least three samples.

TABLE 8: Flexural Modulus (ASTM D790) of curable composition without multistage polymer particles and curable composition prepared from MSP2 masterbatches

| Property | Resin Component | | |
| --- | --- | --- | --- |
| | SR833S only (comparative) | 80% SR833S; 20% MSP2-DP | 80% SR833S; 20% MSP2-SE |
| Flexural Strength (MPa) | 45.16 | 52.39 | 57.80 |
| Strain at Break | 1.48% | 2.68% | 4.20% |
| Strain at Maximum Flexural Stress | 1.37% | 2.51% | 4.00% |
| Energy at Break (J) | 0.10 | 0.21 | 0.42 |
| Flexural Modulus (MPa) | 2876.90 | 1970.99 | 1672.70 |
| Hardness (Shore D) | 89.3 | 85.3 | 80.0 |

The composition without multistage polymer particles had a flexural modulus of 2800 MPa, while the composition with dry-powder multistage polymer particles (MSP2-DP) had a flexural modulus of 1970 MPa and the composition with solvent-exchange multistage polymer particles (MSP2-SE) had a flexural modulus of 1672 MPa. Flexural modulus of the MSP2-SE composition was slightly less than that of the MSP2-DP composition.

Strain at break increased from 1.48% (Control) up to 2.68% (MSP2-DP) and then remarkably to 4.20% (MSP2-SE). These data are consistent with much greater flexibility in the solvent-exchange compositions without sacrifice of flexural strength or hardness.

Hardness was measured using a Shore D durometer. Hardness of the control sample was 89D, while hardness for the dry-powder sample was 85D and for the solvent-exchange sample was 80D. The toughness of the material compared to the control (0.10 J) was double for the sample containing the MSP2-DP and quadruple for the sample containing MSP2-SE. Remarkably, even though the MSP2-DP and MSP2-SE formulations both contain the same ingredients: MSP2 particles, SR833S monomer, and photoinitiator, the differences in the toughness, strain at break, and flexural modulus indicate a significant difference connected with the process used to prepare the masterbatches.

Indirect impact resistance of the cured compositions was measured to determine whether the hydrophobically modified multistage polymer particles dispersed in hydrophobic monomer via the solvent exchange process had similar impact properties to those of the powder dispersion masterbatch.

Five-inch pounds of force (inlbF) was used for impact. Panels were inspected for visible crazing and cracking. Cracks were observed throughout the three impacts on the control samples without multistage polymer particles. All samples containing MSP2-DP or MSP2-SE exhibited no visible cracks, indicating that the sample was able to withstand the impact.

Dielectric Properties

Dielectric properties were measured on the control sample with no multistage polymer particles, the sample with MSP2-DP particles, and the sample with MSP2-SE particles. The data are reported in TABLE 9.

TABLE 9: Dielectric properties of cured compositions of curable composition without multistage polymer particles and curable compositions prepared from MSP2 masterbatches

| Property | Resin Component | | |
|---|---|---|---|
| | SR833S only (comparative) | 80% SR833S; 20% MSP2-DP | 80% SR833S; 20% MSP2-SE |
| Dk (10 GHz average) | 2.77 | 2.69 | 2.76 |
| Df (10 GHz average) | 0.01395 | 0.01354 | 0.01412 |
| Surface Resistivity ($10^{16}$ Q/ square) | 1.39 | 0.324 | 1.53 |
| Volume Resistivity ($10^{16}$ Q.cm) @ 100 V alt pol | 1.17 | 0.279 | 1.23 |

The dielectric constant of the solvent exchange composition with MSP2-SE similar to that of the control sample. The sample with MSP2-DP had a slightly lower dielectric constant than that of the control and that of the MSP2-SE sample. The dielectric losses were similar (0.013) for both the control and MSP2-DP compositions, but the dielectric loss was slightly higher for the MSP2-SE sample. These data indicate that the solvent exchange masterbatch preparation does not negatively affect the electronic properties of the cured product.

For surface and volume resistivity, three locations in a 1.0 -cm$^2$ area were chosen for film thicknesses measurement and their average was used for the volume resistivity input. A Keithley 6517B Electrometer/High Resistance Meter with Interlocked Keithley 8009 test enclosure was used. An alternate polarity measurement at 100V was used with a 5-second measurement time and a 1-second discharge time on each sample. The surface and volume resistivity is measured on one side and then the sample is flipped so an average can be taken.

Surface and volume resistivity were lower for the MSP2-SE composition compared to the MSP2-DP composition. This may be because the solvent exchange masterbatch can give a cleaner product compared to the powder dispersion product, which results in lower surface and volume resistivity.

Most multistage polymer particles with butadiene styrene core are not able to achieve good dispersions and cannot be used with hydrophobic monomers, because the particles will swell and gel the thermoset systems. As these Example demonstrate, a hydrophobically modified multistage polymer particle with a butadiene styrene core provides excellent dispersions in hydrophobic (meth)acrylate monomers having a solubility parameter < 10.5 MPa$^{1/2}$. The particles were demonstrated to increase the impact resistance, toughening, strain at break while maintaining flexural strength and hardness. Shrinkage was lower with thermoset systems containing the hydrophobically modified multistage polymer particles, as a benefit to adhesive properties of the formulations. The electronic properties were not sacrificed with the inclusion of the hydrophobic core shell polymer particles.

The solvent exchange technique was demonstrated to provide hydrophobically modified multistage polymer particles dispersed in (meth)acrylate monomer from a latex emulsion without requiring a spray drying of the latex and a re-dispersing of the particles. This solvent exchange technique provides a good dispersion that is cleaner, owing to a washing step in the solvent exchange process. The removal of residual surfactant, catalysts, and other additives from the latex emulsion provides a masterbatch that has similar particle size with improved mechanical, impact, and electronic properties compared to a masterbatch made from a powdered dispersion.

## Example 8 : Battery Coatings

To further evaluate the performance of multistage polymer particle curable compositions, three curable formulations were prepared that included a difunctional aliphatic urethane acrylate oligomer (CN991), isobornyl acrylate (SR506A), a trifunctional acid ester (SR9051), tricyclodecane dimethanol diacrylate (SR833S), titanium dioxide ($TiO_2$), and two different photoinitiators, including phenyl bis(2,4,6-trimethylbenzoyl)-phosphine oxide (SpeedCure BPO) and 2-hydroxy-2-methyl-1-phenylpropane (SpeedCure 73). A control formulation included the SR833S with no multistage polymer particles. A second formulation included the SR833S as a multistage polymer particle masterbatch of 80% by weight SR833S and 20% by weight hydrophobic MSP2-DP prepared by the dry powder process of Example 1. A third formulation included the SR833S as a multistage polymer particle masterbatch of 80% by weight SR833S and 20% by weight hydrophobic MSP2-SE prepared by the solvent exchange process of Example 2.

To prepare the curable compositions, difunctional aliphatic urethane acrylate oligomer (CN991) and titanium dioxide ($TiO_2$) were added to a Flacktek cup and mixed for 5 minutes at 2000 rpm in a Flacktek® DAC 400.2 VAC high-speed mixer. Then, a ball-milling was used for dispersing titanium dioxide pigments in aqueous media. After dispersion, isobornyl acrylate (SR506A), the tricyclodecane dimethanol diacrylate component (SR833S only, SR833S MSP2-DP masterbatch, or SR833S MSP2-SE masterbatch), trifunctional acid ester (SR9051), and photoinitiators were added to the mixture of oligomer and titanium dioxide and mixed again in a Flacktek cup for 5 minutes until the solution became homogenous. The formulations are summarized in TABLE 10.

TABLE 10: Components of Curable Base Formulations of this Example

| Component | Formulation | | |
|---|---|---|---|
| | SR833S only (comparative) | 80% SR833S; 20% MSP2-DP | 80% SR833S; 20% MSP2-SE |
| | wt.% | wt.% | wt.% |
| SR833S only | 30 | | |
| MSP2-DP masterbatch + SR833S (80% SR833 S/20% MSP2) | | 30 | |
| MSP2-SE masterbatch + SR833S (80% SR833 S/20% MSP2) | | | 30 |
| CN991 | 35 | 35 | 35 |
| SR9051 | 5 | 5 | 5 |
| SR506A | 23 | 23 | 23 |
| $TiO_2$ | 5 | 5 | 5 |
| Speedcure BPO | 1 | 1 | 1 |
| Speedcure 73 | 1 | 1 | 1 |
| TOTAL | 100 | 100 | 100 |

Coating and Curing Method

To prepare coatings, aluminum substrates were wiped with toluene in addition to acetone wipe. Samples were prepared with coating layers of three different thicknesses on an aluminum substrate using a drawdown bar. In a first set, the coating was applied as a single 30 $\mu$m layer. In a second set, the coating was applied as a single 60 $\mu$m layer. In a third set, the coating was applied as two 30 $\mu$m layers (total thickness 60 $\mu$m). The uncured resin coatings were cured using a LED light (395 nm) and fusion lamp (H bulb).

Measurement Techniques

*Adhesion*

The adhesion of the coated resins to the aluminum plate was evaluated according to ASTM Standard D3359 using crosshatch test. In this test, a blade was used to cut small squares to the surface of the coatings, cutting passes make six cuts in the coating, second passes at 90° makes a square lattice pattern. A transparent tape was applied over the patterned surface and was pulled off quickly to release the amount of coating lifted off by the test tape. The crosshatch is rated on a 0 to 5 scale (with 5 being the highest adhesion strength) provided in the ASTM standard.

*Flexibility*

A conical mandrel test instrument was used to assess flexibility of the coatings in accordance with ASTM D522. The bend tester has a bending lever with a roller that pivots on a steel conical mandrel with a diameter ranging from 4 mm to 38 mm. The lever was used to bend the coated substrate over the conical cone. Then, each sample was checked for cracks or crazing.

*Volume Resistivity*

To determine volume resistivity, the thickness of the cured samples was first measured using a Heidenhain Metro length gauge unit accurate within ± 0.2 m with a measuring range of 0 to 12 mm. Five different points in a 1.0 cm$^2$ area of coated samples on aluminum substrate were chosen for film thickness measurement, and their average was used for the volume resistivity input. Volume resistivity was measured using a Keithley 6517B and 8009 fixture at room temperature via the ASTM D-257 standard. An alternating polarity of 100 V was applied to the cured film for 10 seconds with a 20-μA current range prior to measurement to ensure a net zero charge.

*Pencil Hardness*

Graphite pencils with varied hardness are moved across a coating surface to test the hardness of the coating via ASTM D3363-05. The softest pencil that will create a scratch on the surface of the coating determines its hardness in relation to graphite pencils.

Characterizations

The adhesion and hardness results for the three different resins and three distinct coating thicknesses on aluminum substrates are presented in TABLE 11 below. ASTM D3359 details the adhesion ranking scale based on the percent area removed, with 5 being 0% removal and 0 being greater than 65% removal.

TABLE 11: Cross-hatch adhesion and hardness of cured base formulations

| Cured Resin Component | Coating on aluminum substrate | Adhesion (cross hatch) | Pencil Hardness |
|---|---|---|---|
| SR833S only | 30 μm | 3 | H |
| | 60 μm-one layer- | 4 | 3H |
| | 60 μm-two layers | 5 | 4H |
| SR833S + MSP2-DP | 30 μm | 4 | 2H |
| | 60 μm-one layer- | 5 | 5H |
| | 60 μm-two layers | 5 | 6H |
| SR833S + MSP2-SE | 30 μm | 5 | 5H |
| | 60 μm-one layer- | 5 | 6H |
| | 60 μm-two layers | 5 | 7H |

The resin with MSP2-SE exhibits superior adhesion for a thickness of 30 μm and 60 μm-one layer compared to the control resin without multistage polymer particles. The resin with MSP2-SE has better adhesion than the resin with MSP2-DP for a thickness of 30 μm. The results showed also that by including the MSP2-SE, the hardness of the system was increased. Overall, the performance of the MSP2-SE resin outperformed that of the control resin and the MSP2-DP resin.

*Flexibility*

With regard to flexibility measurements with the conical mandrel, the control resin coatings passed the bend test for a thickness of 30 μm, failed for a thickness of 60 μm for one layer at diameters of less than 16 mm, and failed for a thickness of 60 μm for two layers. The addition of multistage polymer particle tougheners improved the flexibility in comparison to the control system. The system containing MSP2-DP passed flexibility for a thickness of 30 μm, failed at diameters of less than 6 mm for a thickness of 60 μm for one layer, and failed at diameters of less than 18 mm for a thickness of 60 μm for two layers. For the system containing MSP2-SE the coated sample with a thickness of 60 μm for two layers failed at diameters of less than 20 mm, whereas both coated samples with thicknesses of 30 μm and 60 μm for one layer displayed outstanding flexibility.

TABLE 12 includes the average measured volume resistivity for five different coated materials.

TABLE 12: Volume resistivity of cured coatings on aluminum substrates

| Cured Resin Component | Coating on Aluminum Substrate | Volume Resistivity ($10^{13}$ $\Omega\cdot$cm) | | | | | Avg Volume Resistivity ($10^{13}$ $\Omega\cdot$cm) |
|---|---|---|---|---|---|---|---|
| | | Film 1 | Film 2 | Film 3 | Film 4 | Film 5 | |
| SR833S only | 30 $\mu$m | 2.16 | 4.81 | 3.87 | 1.01 | 5.01 | 3.37 |
| | 60 $\mu$m-one layer- | 2.27 | 4.51 | 2.27 | 5.84 | 1.90 | 3.36 |
| | 60 $\mu$m-two layers | 0.52 | 5.42 | 1.55 | 4.76 | 5.44 | 3.54 |
| SR833S + MSP2-DP | 30 $\mu$m | 1.24 | 1.55 | 1.09 | 1.07 | 1.33 | 1.24 |
| | 60 $\mu$m-one layer- | 1.44 | 1.14 | 1.08 | 1.44 | 1.20 | 1.28 |
| | 60 $\mu$m-two layers | 1.08 | 1.05 | 1.41 | 1.38 | 1.80 | 1.23 |
| SR833S + MSP2-SE | 30 $\mu$m | 5.15 | 2.28 | 2.40 | 4.33 | 3.33 | 3.50 |
| | 60 $\mu$m-one layer- | 4.44 | 3.16 | 4.02 | 3.16 | 3.44 | 3.65 |
| | 60 $\mu$m-two layers | 1.01 | 2.82 | 7.13 | 5.42 | 2.71 | 3.82 |

All coatings exhibited very good volume resistivity, all on the order of $10^{13}$ Q.cm. The volume resistivity of the MSP2-SE composition was greater than that of the MSP2-DP composition. Without intent to be bound by theory, it is believed that the greater volume resistivity for the MSP2-SE composition may result from cleaner multistage polymer product that the solvent exchange provides, compared to the dry powder process.

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue. The term "substantially" is used herein also to represent the degree by which a quantitative representation may vary from a stated reference without resulting in a change in the basic function of the subject matter at issue. Thus, it is used to represent the inherent degree of uncertainty that may be attributed to any quantitative comparison, value, measurement, or other representation, referring to an arrangement of elements or features that, while in theory would be expected to exhibit exact correspondence or behavior, may in practice embody something less than exact.

Unless otherwise defined, all technical and scientific terms used herein have the same meaning as commonly understood by one of ordinary skill in the art to which the invention belongs. The terminology used in the description herein is for describing particular embodiments only and is not intended to be limiting. As used in the specification and appended claims, the singular forms "a," "an," and "the" are intended to include the plural forms as well, unless the context clearly indicates otherwise.

It is noted that one or more of the following claims utilize the term "wherein" as a transitional phrase. For the purposes of defining the present technology, it is noted that this term is introduced in the claims as an open-ended transitional phrase that is used to introduce a recitation of a series of characteristics of the structure and should be interpreted in like manner as the more commonly used open-ended preamble term "comprising."

It should be understood that where a first component is described as "comprising" or "including" a second component, it is contemplated that, in some embodiments, the first component "consists" or "consists essentially of" the second component. Additionally, the term "consisting essentially of" is used in this disclosure to refer to quantitative values that do not materially affect the basic and novel characteristic(s) of the disclosure.

It should be understood that any two quantitative values assigned to a property or measurement may constitute a range of that property or measurement, and all combinations of ranges formed from all stated quantitative values of a given property or measurement are contemplated in this disclosure.

While particular embodiments have been illustrated and described herein, it should be understood that various other changes and modifications may be made without departing from scope of the claimed subject matter. Moreover, although various aspects of the claimed subject matter have been described herein, such aspects need not be utilized in combination.

It is therefore intended that the appended claims cover all such changes and modifications that are within the scope of the claimed subject matter.

**Claims**

1. A method for preparing a multistage polymer particle masterbatch composition, the method comprising the following steps:

   (a) adding an organic solvent to an aqueous dispersion comprising multistage polymer particles and water, the organic solvent being at least partially miscible in the water;
   (b) increasing a ratio of the organic solvent to the water in the aqueous dispersion by removing liquids from the aqueous dispersion and subsequently replacing the liquids with additional portions of the organic solvent to obtain an organic-solvent based dispersion comprising the multistage polymer particles, the organic solvent, and residual water;
   (c) adding at least one (meth)acrylate monomer to the organic-solvent based dispersion; and
   (d) removing the organic solvent and residual water from the organic-solvent based dispersion to obtain the multistage polymer particle masterbatch composition,

   wherein:

   the multistage polymer particles comprise a core polymer, an inner shell polymer surrounding the core polymer, and an outer shell polymer surrounding the inner shell polymer;
   the core polymer has a glass transition temperature of less than 10 °C;
   the inner shell polymer has a glass transition temperature of at least 60 °C; and
   the outer shell polymer has a glass transition temperature of at least 30 °C.

2. The method of claim 1, wherein the multistage polymer particle masterbatch composition comprises, based on the total weight of the multistage polymer particle masterbatch composition:

   from 60% to 99% by weight (meth)acrylate monomer; and
   from 1% to 40% by weight multistage polymer particles dispersed in the (meth)acrylate monomer.

3. The method of claim 1 or 2, wherein:

   the core polymer comprises residues of monomers chosen from methyl acrylate, propyl acrylate, isopropyl acrylate, butyl acrylate, tert-butyl acrylate, methyl methacrylate, ethyl methacrylate, butyl methacrylate, isoprene, butadiene, combinations of the foregoing, or combinations of isoprene and butadiene with up to 98 wt% of a vinyl monomer residue chosen from styrene, alkylstyrene, acrylonitrile, or alkyl (meth)acrylate;
   the inner shell polymer comprises residues of monomers chosen from methyl (meth)acrylate, ethyl (meth)acrylate, butyl (meth)acrylate, or combinations thereof; and
   the outer shell polymer comprises residues of monomers chosen from alkyl (meth)acrylates, cyclohexyl (meth)acrylate, 4-tertbutyl cyclohexyl (meth)acrylate, bornyl (meth)acrylate, norbornyl (meth)acrylate, isobornyl acrylate, isobornyl (metha)crylate, fenchyl (meth)acrylate, dicyclopentanyl (meth)acrylate, dicyclopentenyl (meth)acrylate, adamantyl acrylate, adamantyl (meth)acrylate, dimethyl adamantyl (meth)acrylate, cyclodecyl acrylate, cyclodecyl (meth)acrylate, or combinations thereof.

4. The method of claim 1 or 2, wherein:

   the core polymer comprises a homopolymer or copolymer of butadiene;
   the inner shell polymer comprises a copolymer of methyl methacrylate and divinyl benzene; and
   the outer shell polymer comprises methyl methacrylate.

5. The method of claim 1 or 2, wherein:
   the outer shell polymer comprises monomer residues of at least one monomer having a Hansen solubility parameter polarity component $\delta_P$ less than 10.5 MPa$^{1/2}$.

6. The method of claim 1, 2, or 5, wherein:

   the core polymer comprises residues of monomers chosen from methyl acrylate, propyl acrylate, isopropyl acrylate, butyl acrylate, tert-butyl acrylate, methyl methacrylate, ethyl methacrylate, butyl methacrylate, isoprene, butadiene, combinations of the foregoing, or combinations of isoprene and butadiene and up to 98 wt% of vinyl monomer residues chosen from styrene, alkylstyrene, acrylonitrile, or alkyl (meth)acrylate;

the inner shell polymer residues of monomers chosen from methyl (meth)acrylate, ethyl (meth)acrylate, butyl (meth)acrylate, or combinations thereof; and

the outer shell polymer residues of monomers chosen from cyclohexyl (meth)acrylate, 4-tertbutyl cyclohexyl (meth)acrylate, bornyl (meth)acrylate, norbornyl (meth)acrylate, isobornyl acrylate, isobornyl (metha)crylate, fenchyl (meth)acrylate, dicyclopentanyl (meth)acrylate, dicyclopentenyl (meth)acrylate, adamantyl acrylate, adamantyl (meth)acrylate, dimethyl adamantyl (meth)acrylate, cyclodecyl acrylate, cyclodecyl (meth)acrylate, or combinations thereof.

7. The method of claim 1 or 2, wherein:

the core polymer comprises a butadiene homopolymer or a butadiene copolymer;
the inner shell polymer comprises a copolymer of methyl methacrylate and divinyl benzene; and
the outer shell polymer comprises isobornyl methacrylate.

8. The method of any one claims 1 to 7, wherein the (meth)acrylate monomer comprises a hydrophobic (meth)acrylate monomer having a Hansen solubility parameter polarity component $\delta_P$ less than 10.5 MPa$^{1/2}$.

9. The method of claim 8, wherein the hydrophobic (meth)acrylate monomer comprises a tricyclodecanedimethanol diacrylate.

10. The method of any one of claims 1 to 9, wherein:

the outer shell polymer comprises monomer residues of at least one monomer having a Hansen solubility parameter polarity component $\delta_P$ less than 10.5 MPa$^{1/2}$; and
the (meth)acrylate monomer is a hydrophobic (meth)acrylate monomer having a Hansen solubility parameter polarity component $\delta_P$ less than 10.5 MPa$^{1/2}$.

11. A multistage polymer particle masterbatch composition prepared according to the method of any one of claims 1 to 10.

12. A curable composition comprising:

a multistage polymer particle masterbatch composition according to claim 11; and
at least one initiator.

13. The curable composition of claim 12, further comprising a photocurable component, in particular a photocurable component comprising at least one photocurable monomer or oligomer chosen from (meth)acrylate monomers; (meth)acrylate oligomers such as epoxy (meth)acrylates, polyester (meth)acrylates, polyether (meth)acrylates, urethane (meth)acrylates, or (meth)acrylated poly(meth)acrylates; ethylenically unsaturated compounds other than a (meth)acrylate-functionalized monomer or oligomer; cationically polymerizable compounds such as epoxides, oxetanes, alcohols, vinyl ethers or vinyl esters; or combinations thereof.

14. A coated substrate, comprising:

a substrate; and
a coating prepared by applying a layer of a multistage polymer particle masterbatch composition according to claim 11 or a curable composition according to claim 12 or 13 on at least a portion of a surface of the substrate and curing the layer.

15. The coated substrate of claim 14, wherein:

the substrate is chosen from metals, ceramics, composites, or polymers; and
the coating is applied to a portion of a battery pack, a portion of a battery housing, or to a conductive element of a battery as a protective layer or a dielectric layer.

Europäisches
Patentamt

European
Patent Office

Office européen
des brevets

## EUROPEAN SEARCH REPORT

Application Number

EP 22 30 7077

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 575 056 A (HEXCEL COMPOSITES LTD [GB]) 1 January 2020 (2020-01-01) | 11-15 | INV. C08J3/12 |
| A | * aspects 33, 34; page 12, line 31 * | 1-10 | C08J3/22 C08J3/24 C08L33/12 |
| X | WO 2020/260638 A1 (ARKEMA FRANCE [FR]) 30 December 2020 (2020-12-30) | 11,13-15 | |
| A | * paragraph [0030]; example 1 * * page 34, line 9 – paragraph 30 * | 1-10,12 | |
| X | US 2021/171760 A1 (GUPTA MANJULI [US] ET AL) 10 June 2021 (2021-06-10) | 11,12 | |
| A | * claims 1,2,33,34 * | 1-10 | |

TECHNICAL FIELDS
SEARCHED        (IPC)

C08J
C08F
C08L

The present search report has been drawn up for all claims

| Place of search | Date of completion of the search | Examiner |
|---|---|---|
| Munich | 2 June 2023 | Schweissguth, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 7077

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2023

| Patent document cited in search report | | Publication date | Patent family member(s) | | Publication date |
|---|---|---|---|---|---|
| GB 2575056 | A | 01-01-2020 | NONE | | |
| WO 2020260638 | A1 | 30-12-2020 | CN | 114258418 A | 29-03-2022 |
| | | | EP | 3990509 A1 | 04-05-2022 |
| | | | FR | 3097866 A1 | 01-01-2021 |
| | | | JP | 2022537815 A | 30-08-2022 |
| | | | KR | 20220025820 A | 03-03-2022 |
| | | | US | 2022298336 A1 | 22-09-2022 |
| | | | WO | 2020260638 A1 | 30-12-2020 |
| US 2021171760 | A1 | 10-06-2021 | CN | 112334503 A | 05-02-2021 |
| | | | EP | 3814392 A1 | 05-05-2021 |
| | | | IL | 279630 A | 01-03-2021 |
| | | | JP | 2021529115 A | 28-10-2021 |
| | | | TW | 202000780 A | 01-01-2020 |
| | | | US | 2021171760 A1 | 10-06-2021 |
| | | | WO | 2020001835 A1 | 02-01-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100222512 A1
- US 3835003 A
- US 5750590 A
- US 5674922 A
- US 5981616 A
- US 6469108 B
- US 6015914 A

**Non-patent literature cited in the description**

- Hansen Solubility Parameters: A user's handbook. CRC Press, 2007